# EUROPÄISCHE PATENTANMELDUNG

(11) **EP 3 993 197 A1**
(43) Veröffentlichungstag der Anmeldung: **04.05.2022**
(21) Anmeldenummer: 21203617.2
(22) Anmeldetag: 20.10.2021
(51) Int. Cl.: H02G 3/04, F21V 15/015, F21V 21/005, H02G 3/06, F21V 31/00, H02G 3/00

(54) **LÄNGLICHES LEUCHTENTRAGSCHIENENSYSTEM, KIT ZUM ZUSAMMENBAU DESSELBEN UND LÄNGLICHES ABDECKELEMENT DAFÜR**

(30) Priorität: 30.10.2020 DE 102020128640
(71) Anmelder: Zumtobel Lighting GmbH, 6850 Dornbirn (AT)
(72) Erfinder: FEURLE, Helmut, 6850 Dornbirn (AT); KOHLER, Christian, 6850 Dornbirn (AT); MÜLLER, Jeremias, 6850 Dornbirn (AT); KRAMPL, Yannick, 6850 Dornbirn (AT)
(74) Vertreter: Kiwit, Benedikt

(57) **Zusammenfassung**

Die vorliegende Erfindung betrifft ein längliches Leuchtentragschienensystem (100) aufweisend eine längliche Tragprofilschiene (1) mit einer Längserstreckung (L), ein elektrisches Anschlusselement (3), eine Vielzahl von Abdeckelementen (4), und eine Vielzahl von Dichtelementen (2). Die Tragprofilschiene (1) begrenzt einen Innenraum (I) wenigstens teilweise. Das elektrische Anschlusselement (3) ist in dem Innenraum (I) angeordnet. Die Tragprofilschiene (1) weist eine längliche Öffnung (13) auf, über die ein elektrisches oder elektronisches Bauteil (40) von außen mit dem elektrischen Anschlusselement (3) elektrisch koppelbar ist. Die Abdeckelemente (4) sind lösbar mit der Tragprofilschiene (1) koppelbar, so dass sie die Öffnung (13) abdecken. Die Dichtelemente (2) sind derart zwischen den Abdeckelementen (4) und der Tragprofilschiene (1) sowie zwischen benachbarten Abdeckelementen (4) angeordnet, so dass die Dichtelemente (2) den Innenraum (I) wenigstens zur Öffnung (13) hin geschlossen abdichten. Die Erfindung betrifft ferner ein Kit zum Zusammenbau eines länglichen Leuchtentragschienensystems (100) sowie ein längliches Abdeckelement (4) zur Längsabdeckung eines Teilabschnitts einer länglichen Öffnung (13) einer länglichen Tragprofilschiene (1) eines Leuchtentragschienensystems.

## Beschreibung

Die vorliegende Erfindung betrifft ein längliches Leuchtentragschienensystem mit einer länglichen Tragprofilschiene, einem in der Tragprofilschiene aufgenommenen elektrischen Anschlusselement sowie einer Vielzahl von Abdeckelementen zum Abdecken einer länglichen Öffnung der Tragprofilschiene. Des Weiteren betrifft die vorliegende Erfindung ein Kit zum Zusammenbau eines solchen länglichen Leuchtentragschienensystems. Zudem betrifft die vorliegende Erfindung ein längliches Abdeckelement zur Längsabdeckung eines Teilabschnitts einer länglichen Öffnung einer länglichen Tragprofilschiene eines entsprechenden Leuchtentragschienensystems.

Längliche Leuchtentragschienensysteme, häufig auch als Lichtbandsystem bezeichnet, sind aus dem Stand der Technik bekannt. An deren Tragprofilschiene können unterschiedliche Arten von Abdeckelementen lösbar angebracht werden, um eine individuell gestaltete Leuchtenanordnung zu bilden. Einige oder alle der Abdeckelemente sind dabei als elektrisch betriebene Komponenten ― also als elektrische oder elektronische Bauteile ― ausgebildet, welche über die Öffnung elektrisch mit dem elektrischen Anschlusselement koppelbar sind, um somit wahlweise betrieben zu werden. Als Abdeckelemente kommen unterschiedlichste Komponenten zum Einsatz, wie beispielsweise Lichtbänder und jegliche andere elektrische oder elektronische Bauteile sowie auch einfache Abdeckungen wie Blenden.

Aufgrund der hohen Variabilität derartiger Lichtbandsysteme sind eine Vielzahl von Komponenten verfügbar, welche in der Regel in beliebiger Weise miteinander kombiniert werden können. Die bekannten Leuchtentragschienensysteme weisen in der Regel einen Berührschutz aber keinen oder nur einen geringen Schutz gegen Wasser auf; beispielsweise gemäß Schutzart IP20.

Es ist somit eine Aufgabe der vorliegenden Erfindung, ein längliches Leuchtentragschienensystem der eingangs genannten Art bereitzustellen, welches neben der hohen Bauteilvariabilität auch vielfältig in unterschiedlichen Einsatzgebieten und Umgebungen eingesetzt werden kann.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung ein längliches Leuchtentragschienensystem. Dieses weist eine längliche Tragprofilschiene mit einer Längserstreckung, ein elektrisches Anschlusselement, eine Vielzahl von Abdeckelementen, und eine Vielzahl von Dichtelementen auf. Die Tragprofilschiene begrenzt wenigstens teilweise einen Innenraum. Das elektrische Anschlusselement ist in dem Inneren angeordnet. Die Tragprofilschiene weist eine längliche Öffnung auf, über die ein elektrisches oder elektronisches Bauteil von außen mit dem elektrischen Anschlusselement elektrisch koppelbar ist. Die Abdeckelemente sind lösbar mit der Tragprofilschiene (insbesondere mechanisch) koppelbar; dies vorzugsweise so, dass sie die Öffnung (gemeinsam) abdecken, also wenigstens teilweise oder ganz abdecken. Die Dichtelemente sind derart zwischen den Abdeckelementen und der Tragprofilschiene sowie zwischen benachbarten Abdeckelementen angeordnet, so dass die Dichtelemente den Innenraum wenigstens zur Öffnung hin und vorzugsweise insgesamt geschlossen abdichten.

Mittels des erfindungsgemäßen länglichen Leuchtentragschienensystems wird es erstmals ermöglicht, ein derart bauteiltechnisch variables System auch mit höherer Schutzart bereitzustellen. Dazu wird eine Vielzahl von Dichtelementen bereitgestellt, welche insbesondere die Stoßstellen oder Überlappungsbereiche oder sonstigen benachbarten Bauteilabschnitte (im Folgenden zusammengefasst auch als Stoßbereiche oder Dichtabschnitte bezeichnet) zwischen den variabel kombinierbaren Bauteilen des Leuchtentragschienensystems wirkungsvoll abdichtet, um so in einfacher und sicherer Weise ein System höherer Schutzart bereitzustellen.

Im Rahmen der vorliegenden Erfindung ist unter einer "Vielzahl" zwei oder mehr zu verstehen. Unter "länglich" ist im Rahmen der Erfindung zu verstehen, dass die entsprechende Komponente bzw. das entsprechende Bauteil eine Länge aufweist, die größer (vorzugsweise um ein Vielfaches) als dessen Breite und als dessen Höhe ist. Die "Längserstreckung" ist die Erstreckung entlang der Länge des Bauteils und kann in beliebiger Weise verlaufen, wie bspw. geradlinig oder abgewinkelt oder gebogen oder wellenförmig oder in jeglicher anderer Weise.

Die Dichtelemente weisen bevorzugt wenigstens einen oder auch mehrere Längsdichtabschnitte auf, welche sich in Längserstreckung bevorzugt beidseits der Öffnung erstrecken; dies besonders bevorzugt zwischen der Tragprofilschiene und dem jeweiligen Abdeckelement und/oder zwischen zwei benachbarten Abdeckelementen. Mittels dieser Längsdichtabschnitte lassen sich insbesondere große und sich im Wesentlichen längs erstreckende Stoßbereiche zwischen Tragprofilschiene und Abdeckelement oder auch zwischen zwei benachbarten Abdeckelementen sicher und einfach zueinander abdichten.

Die Dichtelemente weisen vorzugsweise wenigstens einen oder mehrere Querdichtabschnitte auf, welche sich quer (beispielsweise schräg oder besonders bevorzugt auch senkrecht) zur Längserstreckung und bevorzugt die Öffnung überspannend erstrecken; dies besonders bevorzugt zwischen zwei benachbarten Abdeckelementen und/oder zwischen der Tragprofilschiene und dem jeweiligen Abdeckelement. Diese Querdichtabschnitte ermöglichen es, beispielsweise stirnseitige Stoßbereiche insbesondere bezüglich der jeweiligen Abdeckelemente sicher abzudichten. Überspannt der Querdichtabschnitt dabei die Öffnung, so kann mit nur einem entsprechenden Querdichtabschnitt eine sichere Abdichtung auch über die Öffnung hinweg erzielt werden.

Vorzugsweise kann wenigstens eines der Abdeckelemente wenigstens eines der Dichtelemente als Zwischendichtelement aufweisen, welches in Richtung quer (beispielsweise schräg oder auch senkrecht) zur Längserstreckung sowie rückseitig zum Innenraum hin vorsteht, so dass es bei Blickrichtung senkrecht bezüglich der Längserstreckung auf die Öffnung gesehen mit wenigstens einem Dichtabschnitt der Tragprofilschiene oder wenigstens eines benachbarten Abdeckelements überlappt, um mit diesem/diesen in dichtender Anlage zu stehen; vorzugsweise um mit diesen/diesem senkrecht zur Längsachse in dichtender Anlage zu stehen. In vergleichbarer Weise ist es zusätzlich oder alternativ denkbar, dass das Zwischendichtelement in Richtung quer (beispielsweise schräg oder auch senkrecht) zur Längserstreckung sowie vorderseitig vom Innenraum weg vorsteht, so dass es senkrecht bezüglich der Längserstreckung auf die Öffnung gesehen mit wenigstens einem Dichtabschnitt der Tragprofilschiene und/oder wenigstens eines benachbarten Abdeckelements entsprechend überlappt, um mit diesen/diesem in (vorzugsweise senkrecht zur Längsachse) dichtender Anlage zu stehen.

Mithin ist es also denkbar, dass die Dichtelemente einen oder mehrere Zwischendichtelemente aufweisen, welche sich zwischen wenigstens zwei benachbarten und senkrecht bezüglich der Längserstreckung auf die Öffnung gesehen überlappenden Dichtabschnitten der Tragprofilschiene einerseits und wenigstens eines der Abdeckelemente andererseits oder wenigstens zweier benachbarter Abdeckelemente erstrecken, vorzugsweise in Richtung quer (beispielsweise senkrecht oder schräg) zur Längserstreckung, um folglich den Bereich zwischen diesen Dichtabschnitten entsprechend abzudichten.

Dieser Überlappungsbereich bzw. der so gebildete Zwischenraum zwischen den entsprechenden Dichtabschnitten der benachbarten Komponenten (Tragprofilschiene und Abdeckelement(e) oder wenigstens zwei Abdeckelemente) kann somit in einfacher und sicherer Weise genutzt werden, um dazwischen ein entsprechendes (Zwischen-)Dichtelement vorzusehen und somit diesen Bereich sicher abzudichten.

Das Zwischendichtelement kann als Querdichtabschnitt ausgebildet sein. Mithin kann es sich also quer (also bspw. schräg oder senkrecht) zur Längserstreckung und ferner bevorzugt die Öffnung überspannend erstrecken, um somit eine sichere Abdichtung quer über die (gesamte Breite der) Öffnung hinweg zu gewährleisten.

Das Zwischendichtelement ist bevorzugt an wenigstens einem/einer der beiden gegenüberliegenden Endabschnitte oder Stirnseiten des Abdeckelements in Richtung der Längserstreckung gesehen vorgesehen. Somit kann das Zwischendichtelement an exponierten Bereichen des Abdeckelements bereitgestellt werden, um eine möglichst effektive Dichtwirkung zu ermöglichen.

Wenigstens eines der Abdeckelemente kann bevorzugt an wenigstens einer seiner beiden gegenüberliegenden Stirnseiten in Richtung der Längserstreckung gesehen eines der Dichtelemente als Stirndichtelement aufweisen. Dieses Stirndichtelement weist einen Dichtlippenabschnitt auf, welcher sich längs von dem jeweiligen Abdeckelement weg erstreckt; dies bevorzugt zu einem benachbarten Abdeckelement oder Tragprofilschienenabschnitt (also bspw. ein Dichtabschnitt der Tragprofilschiene) hin. Der Dichtlippenabschnitt steht besonders bevorzugt in Längsrichtung (also in Richtung der Längserstreckung) von dem jeweiligen Abdeckelement vor. Mittels dieses Stirndichtelements kann eine sichere und einfache Abdichtung des Abdeckelements über dessen Stirnseite erfolgen. Somit lässt sich insbesondere bei stirnseitig aneinander gereihten Abdeckelementen eine sichere Längsabdichtung des Leuchtentragschienensystems im Bereich der Öffnung erzielen. Auch bei stirnseitigen Stoßstellen zwischen Abdeckelement und Tragprofilschiene kann so eine entsprechende stirnseitige Längsabdichtung in einfacher Weise erfolgen. Da der Dichtlippenabschnitt bevorzugt von dem Abdeckelement längs vorsteht, kann eine sichere Abdichtung bei einfachem Zusammenbau des Systems ermöglicht werden.

Das Stirndichtelement oder wenigstens dessen Dichtlippenabschnitt ist bevorzugt als Querdichtabschnitt ausgebildet. Folglich kann sich auch das Stirndichtelement bevorzugt quer (also bspw. schräg oder senkrecht) zur Längserstreckung und weiter bevorzugt die Öffnung überspannend erstrecken, so dass auch hier eine sichere Abdichtung quer über die (gesamte Breite der) Öffnung hinweg gewährleistet werden kann.

Bevorzugt stehen die Stirndichtelemente und weiter bevorzugt deren Dichtlippenabschnitte zweier stirnseitig benachbarter Abdeckelemente längs in dichtender Anlage; dies vorzugsweise derart, um die Öffnung (bevorzugt als Querdichtelement) quer dichtend zu überspannen. Auf diese Weise lassen sich zwei benachbarte Abdeckelemente in besonders einfacher und sicherer Weise stirnseitig gegeneinander abdichten. Dabei sind die entsprechenden Stirndichtelemente besonders bevorzugt in der Einbauposition spiegelverkehrt zueinander ausgebildet und angeordnet, so dass eine sichere Abdichtung dieser Bauteile gegeneinander in einfacher Weise gewährleistet werden kann.

Die Abdeckelemente weisen vorzugsweise an wenigstens einer ihrer beiden gegenüberliegenden Stirnseiten in Richtung der Längserstreckung gesehen eine Abdeckkappe auf. Mittels dieser Abdeckkappe können stirnseitige Endbereiche der Abdeckelemente in beliebiger Weise ausgebildet werden. Dies beispielsweise zur Erzielung eines ästhetisch ansprechenden Stirnbereichs. Auch ist es denkbar, dass auf diese Weise das Abdeckelement stirnseitig verschlossen und bevorzugt abgedichtet wird.

Die Abdeckkappe kann hierzu besonders bevorzugt wenigstens eines der Dichtelemente aufweisen oder bilden, vorzugsweise wenigstens das Zwischendichtelement und/oder das Stirndichtelement, besonders bevorzugt den Dichtlippenabschnitt. Mithin kann also die Abdeckkappe in sich mehrere funktionale Elemente vereinen. So kann beispielsweise durch Aufsetzen bzw. Bereitstellen der Abdeckkappe das Abdeckelement an der entsprechenden Stirnseite sogleich in einfacher Weise mit einem oder mehreren der Dichtelemente (beispielsweise Zwischendichtelement und/oder Stirndichtelement und dergleichen) versehen werden. Dieses Dichtelement ist sodann auch an einer definierten Stelle bezüglich des Abdeckelements positioniert, so dass bei Anordnen des Abdeckelements an der Tragprofilschiene das Dichtelement automatisch korrekt positioniert ist bzw. werden kann. Die Dichtelemente können wenigstens teilweise integral miteinander ausgebildet sein. Somit kann, wo möglich und gewünscht, das Ausbilden des oder der Dichtelemente und das Vorsehen desselben/derselben vereinfacht werden. Mithin kann jedes Dichtelement mit jedem anderen Dichtelement integral ausgebildet sein. So kann beispielsweise wenigstens eines der Querdichtelemente mit wenigstens einem der Längsdichtelemente integral ausgebildet sein. Dies ermöglicht insbesondere einen sicheren Übergang von einer Querabdichtung zu einer Längsabdichtung. Beispielsweise kann der Dichtlippenabschnitt sich quer über die Öffnung erstrecken und dann in einen entsprechenden Längsdichtabschnitt zur Bildung eines entsprechenden Längsdichtelements übergehen. Auch können mehrere Querdichtelemente oder mehrere Längsdichtelemente integral miteinander ausgebildet sein. Auch kann wenigstens eines der Zwischendichtelemente mit wenigstens einem der Stirndichtelements bzw. dessen Dichtlippenabschnitt integral ausgebildet sein.

Vorzugsweise weisen die Abdeckelemente jeweils wenigstens einen Teil oder alle der Dichtelemente auf. Die Abdeckelemente können also beispielsweise (jeweils) das bzw. die oder wenigstens einen Teil der Längsdichtabschnitte und/oder der Querdichtabschnitte und/oder der Zwischendichtelemente und/oder der Stirndichtelemente aufweisen. Vorzugsweise weist die Tragprofilschiene wenigstens einen Teil oder alle der Dichtelemente auf. Die Tragprofilschiene kann also beispielsweise das bzw. die oder wenigstens einen Teil der Längsdichtabschnitte und/oder der Querdichtabschnitte und/oder der Zwischendichtelemente und/oder der Stirndichtelemente aufweisen.

Die Dichtelemente sind bevorzugt als separate Elemente oder als integrale Elemente der Tragprofilschiene und/oder der Abdeckelemente bzw. des jeweiligen Abdeckelements bereitgestellt. Die Dichtelemente können vorzugsweise lösbar oder unlösbar mit der Tragprofilschiene und/oder den Abdeckelementen bzw. dem jeweiligen Abdeckelement verbunden sein. Somit können die Dichtelemente in beliebiger Weise und sowohl bezüglich der Position des Dichtelements als auch der variablen Kombinierbarkeit der Bauteile entsprechend bereitgestellt werden. Während die Bereitstellung separater Element die Flexibilität erhöht, ermöglichen integrale Elemente eine einfache und definierte Positionierung der Dichtelemente bspw. am Einbauort beispielsweise durch einfachen Zusammenbau der entsprechenden Komponenten des Leuchtentragschienensystems. Sind die Dichtelemente lösbar vorgesehen, so können diese beispielsweise nach Bedarf beliebig ― bspw. an dem jeweiligen Abdeckelement bzw. der Tragschiene ― vorgesehen und ausgetauscht werden. Dies ist beispielsweise bei einer entsprechenden Individualisierung des Leuchtentragschienensystems vorteilhaft. Auch ist eine Austauschbarkeit von Vorteil, um beispielsweise bei nachlassender Dichtwirkung aufgrund von Versprödung die Dichtelemente einfach auszutauschen. Die unlösbare Bereitstellung der Dichtelemente wiederum hat den Vorteil, dass diese sicher und definiert positioniert sind und sich somit durch einfachen Zusammenbau eine Fehlpositionierung (beispielsweise durch Verrutschen oder Verklemmen) vermieden werden kann.

Die längliche Öffnung erstreckt sich vorzugsweise längs der Längserstreckung der Tragprofilschiene. In einer besonders bevorzugten Ausgestaltungsform weist die Tragprofilschiene einen U-förmigen Querschnitt auf, wobei vorzugsweise die beiden distalen Enden der exponierten Schenkel des Us die längliche Öffnung seitlich begrenzen. Mittels einer derartigen Ausgestaltung kann ein besonders flexibles und stabiles Leuchtentragschienensystem bereitgestellt werden. Die Tragprofilschiene weist dabei besonders bevorzugt profilierte Abschnitte auf, über die die Abdeckelemente mit der Tragprofilschiene mechanisch gekoppelt werden können. Die Abdeckelemente weisen hierzu entsprechend korrespondierende Koppelabschnitte auf. Zudem kann die Tragprofilschiene weitere profilierte Abschnitte aufweisen, um bspw. das elektrische Anschlusselement aufzunehmen oder das Leuchtentragschienensystem zu montieren (bspw. an einer Decke oder einer Wand oder an einer Abhängung als Pendelleuchte).

Vorzugsweise überspannen die Abdeckelemente (also wenigstens eines, mehrere oder alle) jeweils die Öffnung quer zur Längserstreckung. Somit kann durch einfaches Vorsehen des entsprechenden Abdeckelements die Öffnung sogleich quer überspannt werden. Folglich kann mittels nur eines Abdeckelements jeweils an einem entsprechenden Längsabschnitt der Öffnung die entsprechende Längsabdichtung bereitgestellt werden.

Die Abdeckelemente weisen bevorzugt wenigstens teilweise längliche Abdeckelemente auf, welche sich längs der Längserstreckung der Tragprofilschiene und/oder längs der länglichen Öffnung erstrecken, wenn sie eingebaut bzw. mit der Tragprofilschiene gekoppelt sind. Mithin können einige oder alle der Abdeckelemente länglich ausgebildet sein. Somit lässt sich in einfacher Weise die längliche Öffnung mit den Abdeckelementen abschnittsweise abdecken. Die Form der Abdeckelemente sowie der mit diesen abzudeckende Bereich (bspw. dessen Dimension; Länge, Breite, ggf. Höhe) ergibt sich dabei bevorzugt aus der gewünschten Funktion des Abdeckelements sowie der dafür erforderlichen oder gewünschten Längserstreckung. So kann beispielsweise ein Abdeckelement einer Spotleuchte eine vergleichsweise kurze Längserstreckung haben, während ein Abdeckelement eines Lichtbandes entsprechend der gewünschten Länge der Lichtabstrahlfläche ausgebildet sein kann.

Die Abdeckelemente können wenigstens eine Art von Elementen aus der folgenden Gruppe von Abdeckelementen aufweisen: Abdeckungen, wie Blenden (insbesondere in Form von ästhetischen Abdeckungen) oder optische und bevorzugt lichtdurchlässige Abdeckungen, oder funktionale und bevorzugt lichtundurchlässige oder lichtdurchlässige Abdeckungen und dergleichen, und/oder elektrische und/oder elektronische Bauteile, wie Leuchten (bspw. Lichtmodule, Lichtbänder, Spotleuchten, Notleuchten, Wegführungsleuchten, etc.), Sensoren, Funkmodule, Lautsprecher, und dergleichen mehr. Aus den vorgenannten Abdeckelementen kann das Leuchtentragschienensystem in beliebiger Weise zusammengesetzt werden bzw. sein. So können gewünschte Bereiche beispielsweise mit Lichtbändern ausgestattet werden, um eine Raumbeleuchtung bereitzustellen. An definierten Stellen können zudem Spotleuchten vorgesehen werden, um dort eine gerichtete Lichtabgabe zu ermöglichen. Ferner können beispielsweise Sensoren, wie Lichtsensoren oder Bewegungssensoren, an weiteren definierten Stellen vorgesehen werden, um eine Steuerung des Leuchtentragschienensystems zu ermöglichen. Von den vorgenannten elektrischen oder elektronischen Bauteilen nicht abdeckte Bereiche können mit Abdeckungen versehen werden, welche nach Belieben lichtdurchlässig oder lichtundurchlässig ausgebildet sind.

Die Tragprofilschiene weist vorzugsweise wenigstens eine Endkappe auf, um den Innenraum an wenigstens einem seiner beiden gegenüberliegenden Enden in Richtung der Längserstreckung gesehen abzudecken. Somit kann die Tragprofilschiene an ihren Stirnseiten nach Belieben optisch angepasst und/oder räumlich abgeschlossen werden.

Die Endkappe kann bevorzugt wenigstens eines der Dichtelemente aufweisen, um den Innenraum gegenüber der Tragprofilschiene und/oder gegenüber dem angrenzenden Abdeckelement nach außen hin (vorzugsweise geschlossen) abzudichten. Somit kann die Endkappe zur Abdichtung des Leuchtentragschienensystems beitragen, um insgesamt eine Abdichtung des Systems mit hoher Schutzart sicher und einfach zu ermöglichen.

Wenigstens eines der Abdeckelemente ist bevorzugt mehrteilig ausgebildet. Zwischen den Teilen dieses Abdeckelements kann bevorzugt eine Bauteildichtung vorgesehen sein. Diese Bauteildichtung kann dabei besonders bevorzugt eines der Dichtelemente aufweisen oder sein bzw. bilden, um besonders bevorzugt die Öffnung im Bereich des Abdeckelements nach außen abzudichten. Eine mehrteilige Ausgestaltung bietet sich beispielsweise bei elektrischen oder elektronischen Komponenten an, welche in der Regel ein mehrteiliges Gehäuse aufweisen, innerhalb dessen die elektrischen oder elektronischen Komponenten aufgenommen sind.

Das elektrische Anschlusselement kann bevorzugt wenigstens eine längliche Stromschiene aufweisen, welche sich besonders bevorzugt längs in dem Innenraum und weiter bevorzugt entlang einer länglichen Tragprofilwand der Tragprofilschiene erstreckt. Die Tragprofilschiene kann dabei beispielsweise eine Rückwand und zwei sich davon weg erstreckende Seitenwände aufweisen, um somit im Querschnitt eine U-Form zu bilden, wie sie zuvor bereits beispielhaft beschrieben wurde. Die längliche Stromschiene kann dabei beispielsweise an einer oder beiden gegenüberliegenden Seitenwänden vorgesehen sein und sich bevorzugt längs entlang diesen erstrecken. Zusätzlich oder alternativ ist es auch denkbar, dass die längliche Stromschiene beispielsweise an der Rückwand in dem Innenraum vorgesehen ist. Somit ist ein elektrischer Abgriff über einen großen oder den gesamten Bereich entlang der Längserstreckung des Leuchtentragschienensystems bzw. von dessen Tragprofilschiene möglich. Die Abdeckelemente können somit, sofern sie einen elektrischen Abgriff erfordern, an jeder beliebigen Position entlang der Längserstreckung vorgesehen werden, was die Flexibilität des Leuchtentragschienensystems weiter erhöht.

Gemäß einer bevorzugten Ausgestaltungsform weist das längliche Leuchtentragschienensystem mehrere längliche Tragprofilschienen auf, welche bevorzugt stirnseitig in Richtung der jeweiligen Längserstreckung aneinandergereiht angeordnet sind. Somit kann ein beliebig langes und beliebig verzweigtes Leuchtentragschienensystem bereitgestellt werden.

Die Innenräume benachbarter Tragprofilschienen sind besonders bevorzugt miteinander verbunden. Die länglichen Öffnungen benachbarter Tragprofilschienen erstrecken sich vorzugsweise ineinander und dies besonders bevorzugt bündig. Die elektrischen Anschlusselemente, vorzugsweise die länglichen Stromschienen, benachbarter Tragprofilschienen sind vorzugsweise elektrisch und weiter bevorzugt ferner mechanisch miteinander verbunden und erstrecken sich weiter bevorzugt bündig zueinander. Die Bildung eines gemeinsamen, durchgehenden Innenraums ermöglicht eine besonders flexible Anordnung von Abdeckelementen sowie Nutzung des dadurch bereitgestellten Aufnahmeraums. Die Bereitstellung einer durchgehenden länglichen Öffnung ermöglicht das Vorsehen von Abdeckelementen über die gesamte Länge des Leuchtentragschienensystems auch bei Aneinanderreihung mehrerer Tragprofilschienen. Die Verbindung der elektrischen Anschlusselemente ermöglicht eine besonders einfache elektrische Versorgung insbesondere elektrischer oder elektronischer Bauteile (vorzugsweise in Form der Abdeckelemente) unabhängig von deren Positionierung entlang der Längserstreckung des Leuchtentragschienensystems.

Stoßbereiche, vorzugsweise stirnseitige Stoßbereiche, benachbarter Tragprofilschienen sind bevorzugt mit einem Tragschienendichtteil nach außen abgedichtet. Das Tragschienendichtteil kann dabei eine den jeweiligen Stoßbereich überspannende Dichtmanschette sein. Die Tragschienendichtteile weisen besonders bevorzugt eines der Dichtelemente zur Abdichtung auf. Somit kann auch bei Aneinanderreihung mehrerer Tragprofilschienen in besonders einfacher Weise eine Abdichtung des Gesamtsystems insbesondere zur Erzielung einer hohen Schutzart ermöglicht werden.

Die Dichtelemente dichten bevorzugt den Innenraum wenigstens zur Öffnung hin gemäß einer definierten Schutzart ab, vorzugsweise wenigstens gemäß der Schutzart IP64 oder IP67. Somit kann ein besonders flexibles Leuchtentragschienensystem auch mit einer besonders hohen Schutzart bereitgestellt werden.

Gemäß einem zweiten Aspekt betrifft die vorliegende Erfindung ferner ein Kit zum Zusammenbau eines länglichen Leuchtentragschienensystems gemäß der vorliegenden Erfindung. Dieses Kit weist dabei eine Vielzahl von länglichen Tragprofilschienen mit einer Längserstreckung auf, in denen jeweils ein elektrisches Anschlusselement vorgesehen werden kann und vorzugsweise auch vorgesehen ist. Das Kit weist des Weiteren eine Vielzahl von Abdeckelementen auf, vorzugsweise aus der Gruppe von Abdeckelementen aufweisend: Abdeckungen und/oder elektrische Bauteile und/oder elektronische Bauteile, wie zuvor bereits beschrieben. Ferner weist das Kit eine Vielzahl von Dichtelementen auf. Die Abdeckelemente sind lösbar mit den Tragprofilschienen koppelbar, so dass bevorzugt mehrere der Abdeckelemente (gemeinsam) die Öffnung abdecken; also wenigstens teilweise oder ganz. Die Dichtelemente sind derart zwischen den Abdeckelementen und der jeweiligen Tragprofilschiene sowie zwischen den benachbarten Abdeckelementen anordenbar, so dass die Dichtelemente den Innenraum wenigstens zur Öffnung hin geschlossen abdichten.

Das erfindungsgemäße Kit ermöglicht den Zusammenbau eines länglichen Leuchtentragschienensystems gemäß der vorliegenden Erfindung in besonders flexibler und variabler Weise, während gleichzeitig eine vergleichsweise hohe Schutzart erzielt werden kann. Die weiteren Vorteile ergeben sich wie bereits zuvor beschrieben.

Das Kit kann ferner eine Vielzahl von Tragschienendichtteilen aufweisen, wobei Stoßbereiche benachbarter Tragprofilschienen mit wenigstens einem der Tragschienendichtteile nach außen abdichtbar sind. Somit bietet das Kit auch beim Vorsehen mehrerer Tragprofilschienen ein Repertoire an Abdichtmöglichkeiten zum sicheren Abdichten von so gegebenen Stoßbereichen, um auch bei einem beliebig langen und verzweigten System insgesamt eine vergleichsweise hohe Schutzart zu ermöglichen.

Das Kit kann ferner eine Vielzahl von Endkappen aufweisen, wobei jeweils stirnseitig offene Enden der Tragprofilschiene mit wenigstens einer der Endkappen abdeckbar sind. Vorzugsweise kann der jeweilige Innenraum mit der entsprechenden Endkappe gegenüber der Tragprofilschiene und/oder gegenüber dem angrenzenden Abdeckelement nach außen hin (vorzugsweise geschlossen) abdichtbar sein. Endbereiche des Leuchtentragschienensystems können so in besonderes einfacher Weise optisch ansprechend und/oder - insbesondere sofern noch erforderlich - dichtend abgeschlossen werden.

Gemäß einem dritten Aspekt betrifft die vorliegende Erfindung ferner ein längliches Abdeckelement zur Längsabdeckung eines Teilabschnitts einer länglichen Öffnung einer länglichen Tragprofilschiene eines Leuchtentragschienensystems, vorzugsweise gemäß des erfindungsgemäßen Leuchtentragschienensystems wie zuvor beschrieben. Das Abdeckelement weist an wenigstens einer seiner beiden gegenüberliegenden Stirnseiten in Längsrichtung (also bzgl. der Richtung der Längsabdeckung; oder in der Einbausituation entsprechend in Richtung der Längserstreckung der aufnehmenden Tragprofilschiene gerichtet; oder in Richtung der Längserstreckung des Abdeckelements) gesehen ein Stirndichtelement auf, welches einen Dichtlippenabschnitt aufweist, welcher sich längs von dem Abdeckelement weg erstreckt, um von dem Abdeckelement längs vorzustehen. "Längs" bezieht sich hier bevorzugt auf die "Längsrichtung".

Mittels dieses (länglichen) Abdeckelements ist es möglich, durch einfaches Vorsehen desselben in einem entsprechenden Leuchtentragschienensystem das Abdeckelement stirnseitig gegenüber anderen Komponenten, wie benachbarten Abdeckelementen oder Tragprofilschienenabschnitten, dichtend anzuordnen. Da das Abdeckelement das entsprechende Dichtelement gleich mitnimmt, kann dieses in einfacher Weise definiert bereitgestellt werden, um somit eine sichere und effektive Dichtwirkung zu erzielen.

Das Stirndichtelement oder dessen Dichtlippenabschnitt kann sich vorzugsweise quer zur Längsrichtung und besonders bevorzugt über die gesamte Breite des Abdeckelements (beispielsweise quer zur Längsrichtung) erstrecken. Somit kann eine sichere stirnseitige Abdichtung des Abdeckelements besonders bevorzugt über die gesamte Breite des Abdeckelements (also vorzugsweise quer zur Längsrichtung) in einfacher Weise ermöglicht werden.

Das Abdeckelement weist vorzugsweise ferner wenigstens einen Längsdichtabschnitt auf, welcher sich in Längsrichtung und bevorzugt beidseits des Abdeckelements erstreckt. Der Längsdichtabschnitt kann dabei besonders bevorzugt seitlich und/oder rückseitig exponiert bereitgestellt sein oder entsprechend von dem Abdeckelement vorstehen. Das Abdeckelement bietet somit die Möglichkeit, ein Dichtelement zur Längsabdichtung, also zur länglichen Abdichtung des Abdeckelements hier bevorzugt beidseits der länglichen Öffnung einer Tragprofilschiene, bereitzustellen. Die entsprechende Dichtung kann somit in einfacher und effektiver Weise bereitgestellt werden und ist bei einfachem Einbau des Abdeckelements zugleich sicher und vorzugsweise automatisch korrekt positioniert.

Das Abdeckelement weist vorzugsweise ferner wenigstens ein Zwischendichtelement auf, welches in Richtung quer (beispielsweise schräg oder senkrecht) zur Längsrichtung sowie rückseitig und/oder vorderseitig vorsteht. Das Zwischendichtelement ist besonders bevorzugt an wenigstens einem der beiden gegenüberliegenden Endabschnitte oder Stirnseiten des Abdeckelements in Längsrichtung gesehen vorgesehen. Das Abdeckelement bietet somit die Möglichkeit, nicht nur eine Dichtung zur stirnseitigen Abdichtung bereitzustellen, sondern bei Bedarf auch eine rückseitige bzw. vorderseitige Abdichtung zu ermöglichen. Dies ist beispielsweise dann von Vorteil, wenn das Abdeckelement überlappend mit anderen Bauteilen, wie beispielsweise einer Blende, bereitgestellt ist, um gegenüber der dann rückseitig bzw. vorderseitig vorgesehenen Blende eine sichere Abdichtung zu ermöglichen. Das endseitige oder stirnseitige Vorsehen des Zwischendichtelements bezüglich des Abdeckelements ermöglicht eine möglichst effektive Positionierung dieses Dichtelements.

Wie bereits beschrieben, kann das Abdeckelement jedes beliebige Bauteil sein, wie beispielsweise eine Abdeckung (z.B. eine Blende oder eine ästhetische Abdeckung oder eine optische Abdeckung oder eine funktionale Abdeckung) oder ein elektrisches oder elektronisches Bauteil (beispielsweise eine Leuchte oder ein Sensor oder ein Funkmodul oder ein Lautsprecher).

Das Abdeckelement kann an seiner Vorderseite einen Funktionsabschnitt aufweisen. Bei diesen kann es sich beispielsweise um eine Blendenoberfläche oder eine Lichtabgabefläche handeln. Somit kann der im Einbau des Abdeckelements nach außen exponierte Bereich in beliebiger Weise funktional vorteilhaft ausgestaltet sein, bspw. als Line, Linsenraster, Linsenarray, Diffusor, Farbkonversionsschicht, und beliebiges weiteres.

Das Abdeckelement weist vorzugsweise an wenigstens einem seiner beiden gegenüberliegenden Stirnseiten in Längsrichtung gesehen eine Abdeckkappe auf. Die Abdeckkappe kann besonders bevorzugt das Stirndichtelement und/oder das Zwischendichtelement aufweisen oder bilden. Die Vorteile einer derartigen Abdeckkappe wurden bereits beschrieben, so dass auf vorhergehende Ausführungen verwiesen wird, welche auch für das Abdeckelement selbst gelten.

Das Stirndichtelement oder, wenn die Abdeckkappe das Stirndichtelement aufweist bzw. bildet, die Abdeckkappe kann bzw. können als Zweikomponenten-Spritzgussteil hergestellt sein. Der Dichtlippenabschnitt ist dabei besonders bevorzugt aus einem weicheren Material hergestellt als der Rest des Stirndichtelements bzw. der Abdeckkappe. Somit können die entsprechenden Abschnitte des Stirndichtelements bzw. der Abdeckkappe entsprechend ihrer Funktion materialtechnisch optimal ausgebildet werden.

Das Abdeckelement kann wenigstens einen Querdichtabschnitt aufweisen, welcher sich quer und bevorzugt senkrecht zur Längsrichtung erstreckt, wobei vorzugsweise das Zwischendichtelement und/oder das Stirndichtelement oder wenigstens dessen Dichtlippenabschnitt als Querdichtabschnitt ausgebildet ist/sind.

Mehrere der Dichtelemente, wie mehrere Stirndichtelemente und/oder Zwischendichtelemente und/oder Längsdichtelemente und/oder Querdichtelemente, können wenigstens teilweise integral miteinander ausgebildet sein. So können beispielsweise das Stirndichtelement einerseits sowie das Zwischendichtelement und/oder das Längsdichtelement andererseits wenigstens teilweise integral miteinander ausgebildet sein, um die zuvor bereits beschriebene Vorteile zu erzielen. Die Dichtelemente (also hier beispielsweise das Zwischendichtelement und/oder das Stirndichtelement oder wenigstens dessen Dichtlippenabschnitt und/oder der Querdichtabschnitt und/oder der Längsdichtabschnitt) können lösbar oder unlösbar, als separate oder als integrale Elemente, vorgesehen bzw. bereitgestellt sein, um die ebenfalls zuvor bereits beschriebenen Vorteile zu erzielen.

Weitere Merkmale, Ausgestaltungen und Vorteile der vorliegenden Erfindung werden nunmehr anhand der Figuren der begleitenden Zeichnungen im Folgenden beschrieben. Es zeigen:
- Fig. 1: eine perspektivische Ansicht eines länglichen Leuchtentragschienensystems gemäß einem ersten Ausführungsbeispiel der vorliegenden Erfindung,
- Fig. 2: eine perspektivische Ansicht in Explosionsdarstellung des länglichen Leuchtentragschienensystems gemäß Fig. 1,
- Fig. 3: eine perspektivische Ansicht eines Tragschienendichtteils wie in den Figuren 1 und 2 dargestellt,
- Fig. 4: eine perspektivische Detailansicht eines Abdeckelements in Form eines Lichtbandes wie in den Figuren 1 und 2 dargestellt,
- Fig. 5: eine perspektivische Detailansicht V des in Fig. 1 links dargestellten Stirnbereichs des erfindungsgemäßen länglichen Leuchtentragschienensystems,
- Fig. 6: eine perspektivische Schnittansicht der in Fig. 5 dargestellten Detailansicht V,
- Fig. 7: eine perspektivische Detailansicht VII eines mittleren Bereichs des länglichen Leuchtentragschienensystems gemäß Fig. 1,
- Fig. 8: eine perspektivische Schnittansicht der in Fig. 7 dargestellten Detailansicht VII,
- Fig. 9: eine perspektivische Detailansicht IX eines rechten Abschnitts des erfindungsgemäßen länglichen Leuchtentragschienensystems gemäß Fig. 1,
- Fig. 10: eine perspektivische Schnittansicht der in Fig. 9 dargestellten Detailansicht IX,

- Fig. 11: eine perspektivische Detailansicht eines als Abdeckung bzw. Blende ausgebildeten Abdeckelements wie in dem rechten Bereich der Fig. 1 und 2 dargestellt,
- Fig. 12: eine Querschnittsansicht XII-XII in einem rechten Bereich des erfindungsgemäßen länglichen Leuchtentragschienensystems gemäß Fig. 1 in Längsrichtung zur rechten Seite in Fig. 1 gesehen betrachtet,
- Fig. 13: eine perspektivische Detailansicht eines als Abdeckung ausgebildeten Abdeckelements wie auf der linken Endseite des länglichen Leuchtentragschienensystems gemäß Fig. 1 und 2 dargestellt,
- Fig. 14: eine Querschnittsansicht XIV-XIV in einem linken Bereich des erfindungsgemäßen länglichen Leuchtentragschienensystems gemäß Fig. 1 in Längsrichtung zur linken Seite in Fig. 1 gesehen betrachtet, und
- Fig. 15: eine perspektivische Darstellung einer Endkappe des erfindungsgemäßen länglichen Leuchtentragschienensystems gemäß Fig. 1.

Die Figuren zeigen ein Ausführungsbeispiel eines erfindungsgemäßen länglichen Leuchtentragschienensystems 100 sowie Komponenten desselben in unterschiedlichen Ansichten, Detailansichten und Schnittansichten.

Das längliche Leuchtentragschienensystem 100 weist eine längliche Tragprofilschiene 1 mit einer Längserstreckung L auf. Die hier dargestellten Tragprofilschienen 1 weisen in dem dargestellten Ausführungsbeispiel eine geradlinige Längserstreckung L auf. Es ist jedoch auch denkbar, dass die Tragprofilschiene 1 eine anders geformte Längserstreckung L, wie beispielsweise eine abgewinkelte oder gebogene oder wellenförmige Längserstreckung L aufweist. Eine Richtung der Längserstreckung L entspricht somit vorzugsweise einer Tangente der bzw. der Ausrichtung der Längserstreckung L im Querschnitt senkrecht zur Längserstreckung L des betrachteten Bereichs der Tragprofilschiene 1.

Die Tragprofilschiene 1 begrenzt wenigstens teilweise einen Innenraum I. Die Tragprofilschiene 1 weist, wie in dem Ausführungsbeispiel dargestellt, hier einen im wesentlichen U-förmigen Querschnitt auf. Die Tragprofilschiene 1 weist hier mehrere Tragprofilwände 10-12 auf; hier eine Rückwand 10, von der sich in Richtung der Längserstreckung L gesehen beidseits Seitenwände 11, 12 hier parallel weg erstrecken. Die Tragprofilwände 10-12 bilden so die hier beispielhaft dargestellte U-Form im Querschnitt der Tragprofilschiene 1.

Die Tragprofilschiene 1 weist eine längliche Öffnung 13 auf. Die längliche Öffnung 13 erstreckt sich bevorzugt längs der Längserstreckung L der Tragprofilschiene 1 und hier besonders bevorzugt entlang der gesamten Länge der Tragprofilschiene 1. Folglich ist die Öffnung 13 des dargestellten Ausführungsbeispiels durch die hier bezüglich der Tragprofilwände 10-12 begrenzt einseitig offene Tragprofilschiene 1 gebildet.

Die Tragprofilschiene 1 kann bevorzugt profilierte Koppelabschnitte 15 aufweisen, über die die Abdeckelemente 4 mit der Tragprofilschiene 1 mechanisch gekoppelt werden können. Die Abdeckelemente 4 weisen hierzu entsprechend korrespondierende Koppelabschnitte 49 auf. Zudem kann die Tragprofilschiene 1 weitere profilierte Abschnitte aufweisen, um bspw. das elektrische Anschlusselement aufzunehmen (bspw. Aufnahmeabschnitte 16) oder das Leuchtentragschienensystem 100 zu montieren (Montageabschnitt 17) bspw. an einer Decke oder einer Wand oder an einer Abhängung 8 als Pendelleuchte).

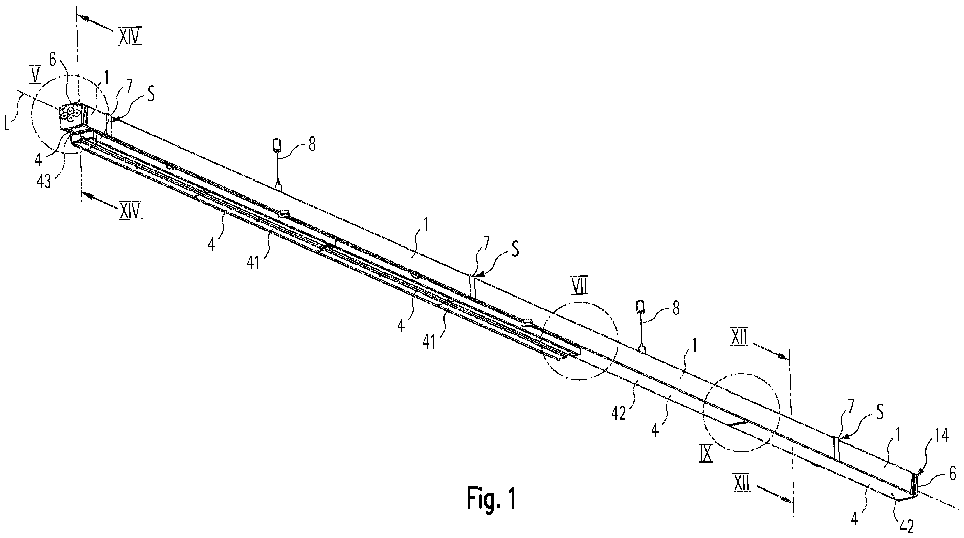

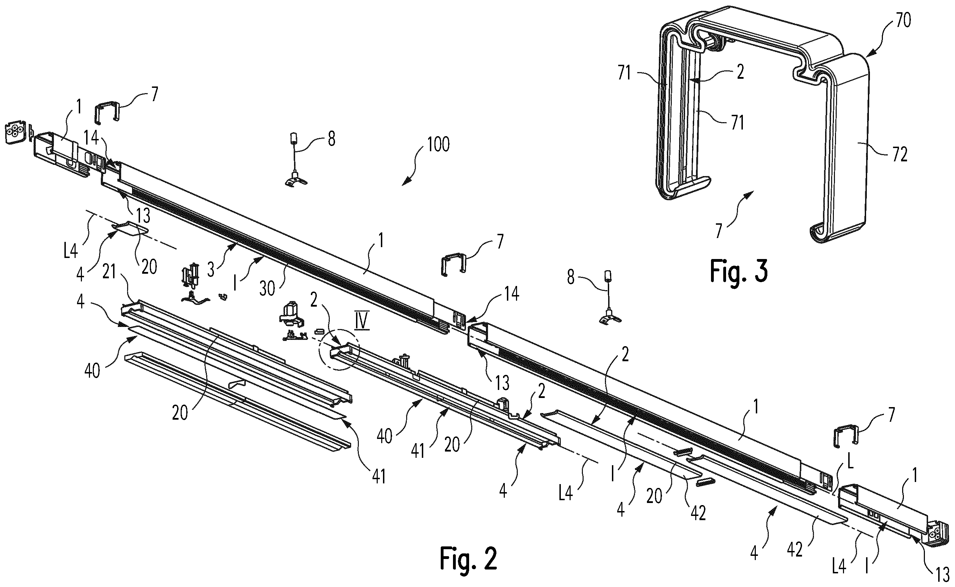

Wie dem Ausführungsbeispiel zu entnehmen ist, kann das Leuchtentragschienensystem 100 mehrere der länglichen Tragprofilschienen 1 aufweisen. Diese sind dann, wie beispielsweise der Fig. 1 zu entnehmen ist, stirnseitig in Richtung der bzw. ihrer (jeweiligen) Längserstreckung L aneinandergereiht angeordnet, um somit ein beliebig langes und beliebig verzweigtes Leuchtentragschienensystem 100 zu bilden. Die Innenräume I benachbarter Tragprofilschienen 1 können, wie beispielsweise der Fig. 2 zu entnehmen ist, miteinander verbunden sein und somit beispielsweise einen zusammenhängenden Innenraum bzw. Aufnahmeraum des Leuchtentragschienensystems 100 bilden. Ebenso können auch die länglichen Öffnungen 13 benachbarter Tragprofilschienen 1 sich bevorzugt bündig ineinander erstrecken, um besonders bevorzugt, wie Fig. 2 zu entnehmen ist, eine zusammenhängende längliche Öffnung über die gesamte oder wenigstens einen großen Teil der Länge des Leuchtentragschienensystems 100 zu bilden.

Das längliche Leuchtentragschienensystem 100 weist des Weiteren ein elektrisches Anschlusselement 3 auf. Das elektrische Anschlusselement 3 dient dabei dem elektrischen Anschluss von elektrischen oder elektronischen Bauteilen 4. Vorzugsweise ist über die längliche Öffnung 13 ein solches elektrisches oder elektronisches Bauteil 40 von außen mit dem elektrischen Anschlusselement 3 elektrisch koppelbar, wie aus der Zusammenschau der Figuren 1 und 2 zu entnehmen ist.

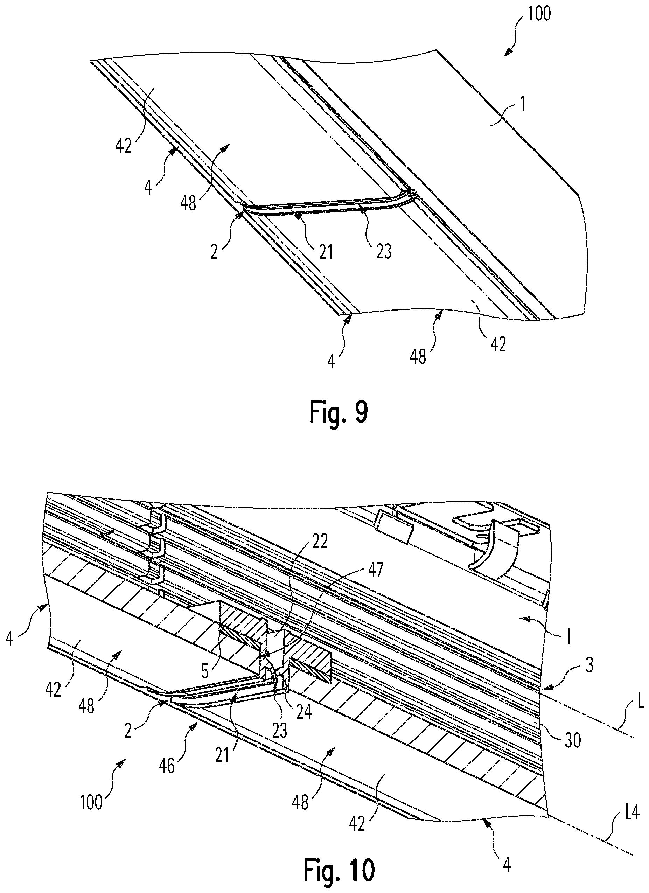

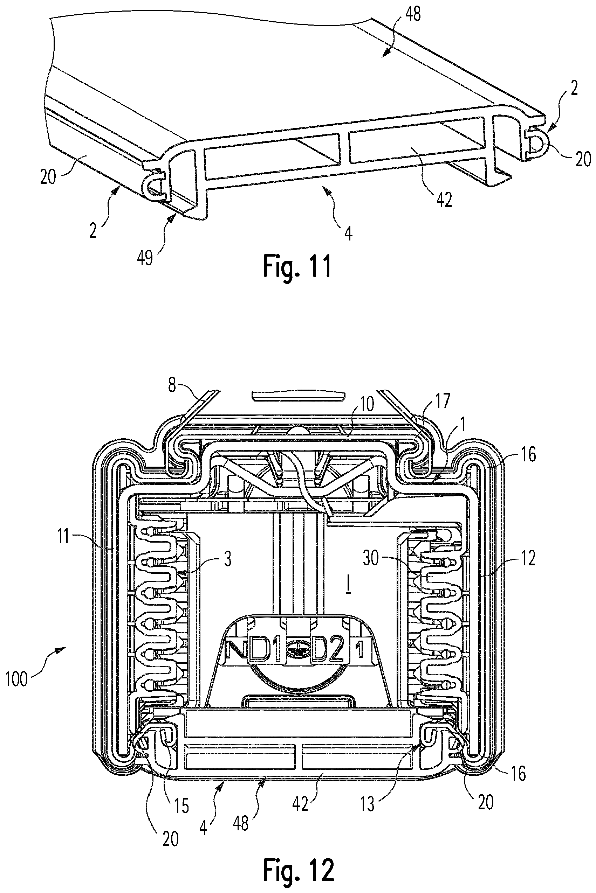

Das elektrische Anschlusselement 3 kann wenigstens eine längliche Stromschiene 30 aufweisen bzw. bilden. Wie insbesondere den Figuren 10 und 12 zu entnehmen ist, kann sich diese längliche Stromschiene 30 bevorzugt längs in dem Innenraum I und besonders bevorzugt entlang einer der länglichen Tragprofilwände 10-12 (hier entlang der gegenüberliegenden Seitenwände 11, 12) der Tragprofilschiene 1 erstrecken. Auch ist es denkbar, dass sich eine entsprechende Stromschiene 30 zusätzlich oder alternativ an bzw. entlang der Rückwand 10 erstreckt. Wie dem Ausführungsbeispiel insbesondere mit Blick auf Fig. 2 zu entnehmen ist, erstreckt sich das elektrische Anschlusselement 3 in Form einer Stromschiene 30 hier bevorzugt im Wesentlichen über die gesamte Länge der Tragprofilschiene 1. Dies bevorzugt in einer Weise, dass die elektrischen Anschlusselemente 3, vorzugsweise in der Ausprägung als längliche Stromschienen 30, benachbarter Tragprofilschienen 1 elektrisch und ferner bevorzugt mechanisch miteinander verbunden sind und sich bevorzugt bündig zueinander erstrecken, wie dies beispielhaft in Fig. 10 gezeigt ist. Somit kann auf einfacher Weise ein sich bevorzugt über die gesamte oder wenigstens einen großen Teil der Länge des Leuchtentragschienensystems 100 auch bei Vorliegen mehrerer Tragprofilschienen 1 sich erstreckendes elektrisches Anschlusselement 3 (hier bspw. in Form einer durchgehenden länglichen Stromschiene 30) bereitgestellt werden, um somit einen elektrischen Abgriff über die gesamte Länge des Leuchtentragschienensystems 100 frei wählbar vornehmen zu können.

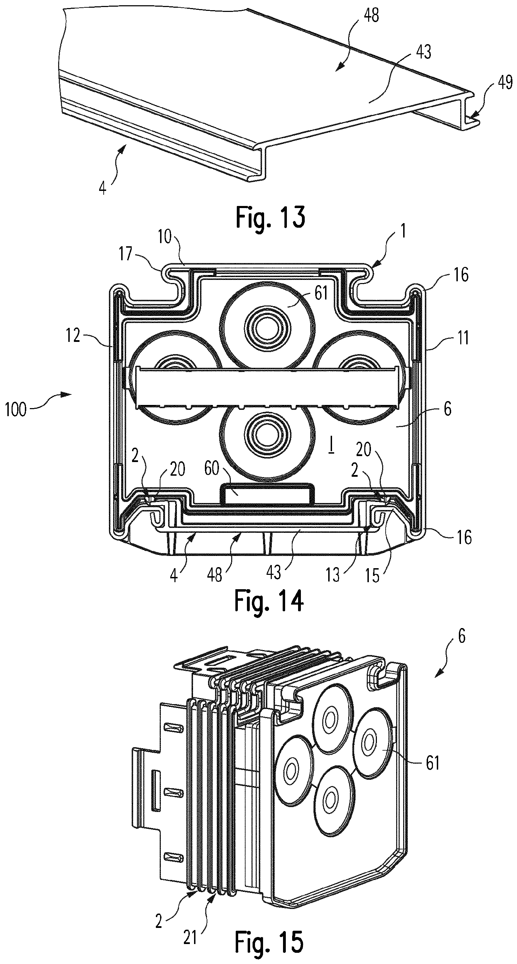

Das längliche Leuchtentragschienensystem 100 weist des Weiteren eine Vielzahl von Abdeckelementen 4 auf; im gezeigten Ausführungsbeispiel fünf Abdeckelemente 4, wobei die Vielzahl von Abdeckelementen 4 auch eine andere Anzahl an Abdeckelementen 4 aufweisen kann, wie zwei oder beliebig mehr. Die Abdeckelemente 4 sind lösbar mit der Tragprofilschiene 1 koppelbar, so dass sie die Öffnung 13 abdecken; dies wenigstens teilweise oder - wie beispielhaft Fig. 1 zu entnehmen ist - (im Wesentlichen) ganz. Wie ebenso der Fig. 1 zu entnehmen ist, können die Abdeckelemente 4 jeweils die Öffnung 13 quer zur Längserstreckung L der Tragprofilschiene 1 überspannen. In Richtung senkrecht bezüglich der Längserstreckung L auf die Öffnung 13 gesehen überspannen die Abdeckelemente 4 die Öffnung 13 bevorzugt in einer Weise quer, dass diese mit Randabschnitten der Öffnung 13 überlappen bzw. die Öffnung 13 ― hier beidseits - überragen, wie dies beispielsweise in den Figuren 12 und 14 gezeigt ist.

Wie insbesondere den Figuren 1 und 2 zu entnehmen ist, sind wenigstens einige der Abdeckelemente 4 wenigstens teilweise länglich ausgebildet, so dass sie sich hier im eingebauten Zustand bevorzugt längs der Längserstreckung L der Tragprofilschiene 1 und/oder längs der länglichen Öffnung 13 erstrecken.

Die Abdeckelemente 4 können wenigstens eine Art von Elementen aus der folgenden Gruppe von Abdeckelementen aufweisen, darunter beispielsweise Abdeckungen wie Blenden 42 (beispielsweise als ästhetische Abdeckung und/oder lichtundurchlässig) und/oder funktionale Abdeckungen 43 (beispielsweise lichtundurchlässig oder lichtdurchlässig) und/oder optische Abdeckungen (beispielsweise lichtdurchlässig), und/oder elektrische und/oder elektronische Bauteile 40, wie Leuchten (z.B. Lichtmodule, Lichtbänder 41, Spotleuchten, Notleuchten, Wegführungsleuchten, etc.), Sensoren, Funkmodule, Lautsprecher und dergleichen mehr. Wie beispielsweise der Explosionsdarstellung des Lichtbandes 41 auf der linken Seite der Fig. 2 zu entnehmen ist, kann wenigstens eines der Abdeckelemente 4 mehrteilig ausgebildet sein, wobei zwischen den Teilen dieses Abdeckelements 4 vorzugsweise eine Bauteildichtung vorgesehen ist, um beispielsweise das hier elektronische Abdeckelement 4 wenigstens teilweise nach außen hin abzudichten.

Das längliche Leuchtentragschienensystem 100 weist des Weiteren eine Vielzahl von Dichtelementen 2 auf. Die Dichtelemente 2 sind derart zwischen den Abdeckelementen 4 und der Tragprofilschiene 1 sowie zwischen benachbarten der Abdeckelemente 4 angeordnet, so dass die Dichtelemente 2 den Innenraum I wenigstens zur Öffnung 13 hin geschlossen abdichten.

Die Dichtelemente 2 können beispielsweise einen oder auch mehrere Längsdichtabschnitte 20 aufweisen, welche sich in Längserstreckung L und bevorzugt beidseits der Öffnung 13 erstrecken, wie dies beispielhaft den Figuren 2, 4, 11, 12 und 14 zu entnehmen ist. Die Längsdichtabschnitte 20 können sich dabei bevorzugt zwischen der Tragprofilschiene 1 einerseits und dem jeweiligen Abdeckelement 4 andererseits (wie in dem Ausführungsbeispiel gezeigt) und/oder zwischen zwei benachbarten Abdeckelementen 4 entsprechend erstrecken.

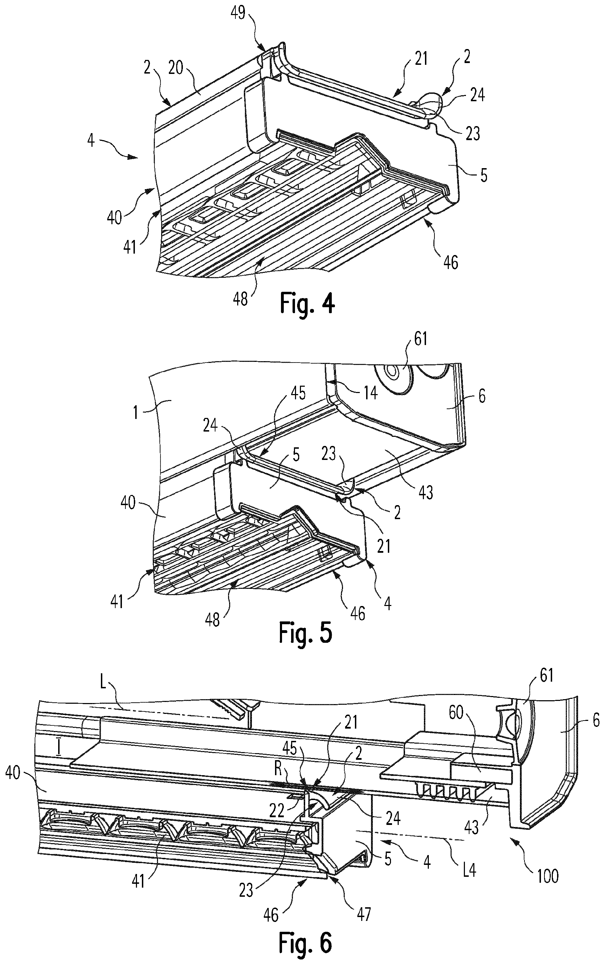

Die Dichtelemente 2 können beispielsweise einen oder auch mehrere Querdichtabschnitte 21 aufweisen, welche sich quer (beispielsweise schräg oder senkrecht) zur Längserstreckung L und bevorzugt die Öffnung 13 überspannend erstrecken. Solche Querdichtabschnitte 21 sind beispielsweise deutlich in den Figuren 4 bis 10 zu erkennen. Die Querdichtabschnitte 21 erstrecken sich dabei besonders bevorzugt zwischen zwei benachbarten Abdeckelementen 4, wie in dem Ausführungsbeispiel gezeigt, und/oder zwischen der Tragprofilschiene 1 und dem jeweiligen Abdeckelement 4.

Die Dichtelemente 2 können beispielsweise einen oder auch mehrere Zwischendichtelemente 22 aufweisen, welche sich zwischen wenigstens zwei benachbarten und senkrecht bezüglich der Längserstreckung L auf die Öffnung 13 gesehen überlappenden Dichtabschnitten 45 der Tragprofilschiene 1 einerseits und wenigstens eines der Abdeckelemente 4 andererseits oder - wie in Fig. 6 gezeigt - wenigstens zweier benachbarter Abdeckelemente 4 erstrecken, vorzugsweise in Richtung quer (beispielsweise senkrecht oder schräg) zur Längserstreckung L. In einer bevorzugten Ausgestaltungsform kann dabei wenigstens eines der Abdeckelemente 4 wenigstens eines der Dichtelemente 2 als Zwischendichtelemente 22 aufweisen, welches in Richtung quer (beispielsweise schräg oder senkrecht) zur Längserstreckung L sowie rückseitig zum Innenraum I hin (vgl. bspw. Fig. 6) und/oder vorderseitig vom Innenraum I weg vorstehen, so dass es senkrecht bezüglich der Längserstreckung L auf die Öffnung 13 gesehen mit dem benachbarten bzw. gegenüberliegenden Dichtabschnitt 45 der Tragprofilschiene oder, wie in dem Ausführungsbeispiel gezeigt, eines benachbarten Abdeckelements 4 überlappt, um mit diesem (hier senkrecht zur Längsachse L) in dichtender Anlage zu stehen. Dies ist insbesondere deutlich der Fig. 6 zu entnehmen. Dabei kann, wie der Zusammenschau aus Figuren 5 und 6 zu entnehmen ist, das Zwischendichtelement 22 als Querdichtabschnitt 21 ausgebildet sein.

Das Zwischendichtelement 22 kann an wenigstens einem oder, wie dargestellt, an beiden der beiden gegenüberliegenden Endabschnitte 46 oder Stirnseiten 47 des Abdeckelements 4 in Richtung der Längserstreckung L gesehen vorgesehen sein.

Eine Dichtung mittels Zwischendichtelement 22 bietet sich, wie dargestellt, besonders bevorzugt an wenigstens einem Längsende des Leuchtentragschienensystems 100 in Richtung der Längserstreckung L gesehen an, um einen Längenausgleich bei Aufrechterhaltung der Dichtwirkung bereitzustellen. So kann es im Betrieb des Systems 100 beispielsweise zu einer Temperatur-bedingten Ausdehnung der Komponenten kommen, welche bspw. je nach Material und Nähe zu möglichen Hitzequellen von Komponente zu Komponente unterschiedlich ausfallen kann. Infolgedessen kann es zu einer partiellen Relativverschiebung R der Komponenten (bspw. Tragprofilschiene 1 zu Abdeckelement 4 oder Abdeckelemente 4 zueinander) kommen. Diese fällt bspw. bei dem gezeigten Leuchtentragschienensystem 100 in Richtung seiner Längserstreckung L am Größten aus, da dessen Dimensionen in dieser Richtung am Größten sind und auch die Abdeckelemente 4 (inkl. elektrischer/elektronischer Bauteile 40) in dieser Richtung hintereinander gereiht angeordnet sind. Um die Dichtwirkung nun trotz etwaiger Längsverschiebung aufrechtzuerhalten, sind insbesondere die quer zu der Ausdehnungsrichtung bzw. hier der Längserstreckung gerichteten Dichtbereiche am anfälligsten. Insofern wird mit dem Zwischendichtelement 22 eine Dichtung bereitgestellt, welche ihre Dichtwirkung durch Anlage in Richtung quer (also schräg oder senkrecht) zur Längserstreckung L bewirkt, so dass diese auch bei einer Relatiwerschiebung R der in dichtender Anlage stehenden Komponenten aufrechterhalten bleibt. Wie dies insbesondere in der Fig. 6 verdeutlicht ist, kann das Zwischendichtelement 22 entlang des hier als (funktionale) Abdeckung 43 ausgebildeten, benachbarten Abdeckelements 4 in Längsrichtung L wandern R, während die Dichtung vollständig aufrechterhalten bleibt.

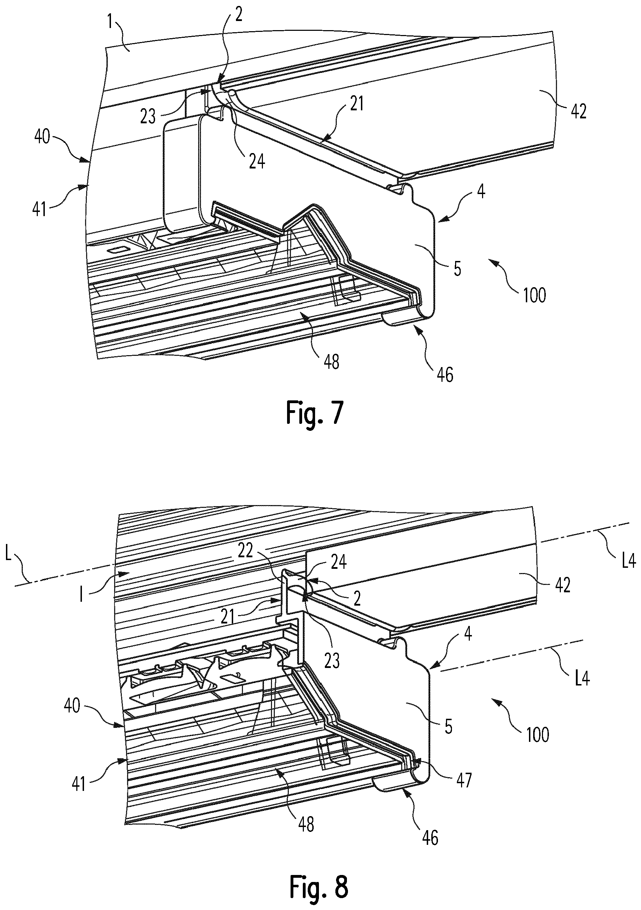

Wenigstens eines der Abdeckelemente 4 kann an wenigstens einer - oder wie dargestellt an beiden - seiner beiden gegenüberliegenden Stirnseiten 47 in Richtung der Längserstreckung L gesehen eines der Dichtelemente 2 als Stirndichtelement 23 aufweisen, wie dies in den Figuren 4 bis 10 beispielhaft gezeigt ist. Das Stirndichtelement 23 weist dabei bevorzugt einen Dichtlippenabschnitt 24 auf, welcher sich längs von dem jeweiligen Abdeckelement 4 weg erstreckt. In einer bevorzugten Ausgestaltungsform steht der Dichtlippenabschnitt 24 in Längsrichtung von dem jeweiligen Abdeckelement 4 vor, wie dies beispielsweise den Darstellungen der Figuren 4 bis 6, 8 und 10 deutlich zu entnehmen ist. In einer weiter bevorzugten Ausgestaltungsform erstreckt sich der Dichtlippenabschnitt 24 bevorzugt längs von dem jeweiligen Abdeckelement 4 weg zu einem benachbarten Abdeckelement 4 oder Tragprofilschienenabschnitt der Tragprofilschiene 1 hin, wie dies insbesondere den Darstellungen der Figuren 8 und 10 zu entnehmen ist. Während in der Detaildarstellung der Fig. 8 gezeigt ist, dass der so vorstehende Dichtlippenabschnitt 24 in stirnseitiger Anlage mit dem benachbarten Abdeckelement 4 steht, zeigt die Detailansicht der Fig. 10, dass hier Dichtlippenabschnitte 24 zweier benachbarter Abdeckelemente 4 miteinander in dichtender Anlage stehen. Dazu sind die Stirndichtelemente 23 bzw. deren Dichtlippenabschnitte 24 hier bevorzugt zueinander spiegelverkehrt angeordnet, also aufeinander zu gerichtet, um somit eine sichere und einfache Dichtwirkung bereitzustellen. Der Dichtlippenabschnitt 24 kann, wie beispielhaft in den Fig. 6, 8 und 10 dargestellt, vorzugsweise zum Innenraum I hin (konvex) gewölbt sein bzw. von dem Innenraum I weg gebogen vorstehen, um somit einen besseren Schutzgegen eindringendes Wasser zu ermöglichen.

Das Stirndichtelement 23 oder wenigstens dessen Dichtlippenabschnitt 24 sind besonders bevorzugt als Querdichtabschnitt 21 ausgebildet bzw. bereitgestellt, um hier besonders bevorzugt quer bezüglich der Längserstreckung L gesehen eine möglichst breite Dichtwirkung bevorzugt quer über die Öffnung 13 hinweg zu ermöglichen.

Wie bereits erwähnt, können die Stirndichtelemente 23, vorzugsweise deren Dichtlippenabschnitte 24, wenigstens zweier stirnseitig benachbarten Abdeckelemente 4 längs in dichtender Anlage stehen; dies vorzugsweise derart, so dass sie gemeinsam die Öffnung (vorzugsweise als Querdichtelemente 21) quer dichtend überspannen, wie dies beispielhaft aus der Zusammenschau der Figuren 9 und 10 ersichtlich ist.

Wie insbesondere den Figuren 2 bis 10 zu entnehmen ist, können die Abdeckelemente 4 an wenigstens einer ihrer beiden gegenüberliegenden Stirnseiten 47 in Richtung der Längserstreckung L gesehen eine Abdeckkappe 5 aufweisen. Diese kann beispielsweise das entsprechende Abdeckelement 4 an der entsprechenden Stirnseite 47 ästhetisch abschließen bzw. abdecken. Auch ist es denkbar, dass die Abdeckkappe 5 zudem eine dichtende Funktion in der Weise hat, um das Innere des Abdeckelements 4 stirnseitig gegen Eindringen von Staub und/oder Feuchtigkeit zu schützen; besonders bevorzugt zur Erzielung einer hohen Schutzart des Abdeckelements 4 selbst, wie beispielsweise IP64 oder IP67.

Die Abdeckkappe 5 kann bevorzugt wenigstens eines der Dichtelemente 2 aufweisen oder bilden, vorzugsweise wenigstens eines der Zwischendichtelemente 22 und/oder wenigstens eines der Stirndichtelemente 23, besonders bevorzugt wenigstens einen der Dichtlippenabschnitte 24. Wie insbesondere den Figuren 6, 8 und 10 zu entnehmen ist, ist die Abdeckkappe 5 hier integral mit den entsprechenden Dichtelementen 2 ausgebildet. Es ist denkbar, dass das Stirndichtelement 23 oder, wenn die Abdeckkappe 5 das Stirndichtelement 23 aufweist bzw. bildet, die Abdeckkappe 5 als Zweikomponenten-Spritzgussteil hergestellt ist. Dabei ist dann vorzugsweise der Dichtlippenabschnitt 24 aus einem weicheren Material hergestellt als der Rest des Stirndichtelements 23 bzw. der Abdeckkappe 5, um die unterschiedlichen Funktionsbereiche dieses integralen Bauteils optimal bereitzustellen.

Die Dichtelemente 2 können insgesamt wenigstens teilweise integral miteinander ausgebildet sein. So kann beispielsweise, wie der Fig. 4 zu entnehmen ist, vorzugsweise wenigstens eines der Querdichtelemente 21 mit wenigstens einem der Längsdichtelemente 20 integral ausgebildet sein. Auch können beispielsweise mehrere Querdichtelemente 21 oder mehrere Längsdichtelemente 20 integral miteinander ausgebildet sein. So kann auch, wie beispielsweise Fig. 6, 8 und 10 zu entnehmen ist, wenigstens eines der Zwischendichtelemente 22 mit wenigstens einem der Stirndichtelements 23 bzw. dessen Dichtlippenabschnitt 24 integral ausgebildet sein; hier ferner integral mit der Abdeckkappe 5.

Die Abdeckelemente 4 können bevorzugt jeweils wenigstens einen Teil oder alle der Dichtelemente 2 aufweisen; in dem Ausführungsbeispiel weisen die Abdeckelemente hier wenigstens die beidseitigen Längsdichtabschnitte 20 und zahlreiche Querdichtabschnitt 21, insbesondere hier die Zwischendichtelemente 22 sowie die Stirndichtelemente 23 samt Dichtlippenabschnitt 24. Auch ist es denkbar, dass die Tragprofilschiene 1 wenigstens einen Teil oder auch alle der Dichtelemente 2 aufweist.

Die Dichtelemente 2 können als separate Elemente oder als integrale Elemente der Tragprofilschiene 1 und/oder des jeweiligen Abdeckelements 4 bzw. der Abdeckelemente 4 bereitgestellt sein. Die Dichtelemente 2 können ebenso lösbar oder unlösbar mit der Tragprofilschiene 1 und/oder dem jeweiligen Abdeckelement 4 bzw. den Abdeckelementen 4 verbunden sein.

Wie insbesondere den Figuren 1, 2, 5, 6 und 14 in Verbindung mit der Fig. 15 zu entnehmen ist, kann die Tragprofilschiene 1 ferner wenigstens eine (vorzugsweise lösbare) Endkappe 6 aufweisen, um den Innenraum I an wenigstens einem seiner beiden gegenüberliegenden Enden 14 in Richtung der Längserstreckung L gesehen (wahlweise) abzudecken. Die Endkappe 6 kann dabei bevorzugt wenigstens eines der Dichtelemente 2 aufweisen, um den Innenraum I gegenüber der Tragprofilschiene 1 und/oder gegenüber dem angrenzenden Abdeckelement 4 nach außen hin geschlossen abzudichten. Die Endkappe 6 kann als Zweikomponenten-Spritzgussteil hergestellt sein, wobei die Dichtelemente 2 aus einem weicheren Material hergestellt sind als der Rest der Endkappe 6. Die Endkappe 6 kann vorzugsweise ein atmungsaktives Element 60, beispielsweise aus einem atmungsaktiven Schaum, aufweisen, um einerseits für einen ausreichenden Luftausgleich in dem System 100 zu sorgen; bspw. aufgrund steigender Temperaturen im Betrieb. Zudem soll dieses Element 60 wie eine Dampfbremse wirken, und insbesondere das Eindringen von Feuchtigkeit in das System verhindert. Zum Einführen bspw. von externen Kabeln kann die Endkappe 6 ferner Gummitüllen 61 oder dergleichen aufweisen.

Im Übrigen kann auch die vorbeschriebene Bauteildichtung des Abdeckelements 4 vorzugsweise eines der Dichtelemente 2 aufweisen oder sein, um besonders bevorzugt die Öffnung 13 im Bereich des Abdeckelements 4 nach außen hin abzudichten.

Wie beispielsweise den Figuren 1 und 2 insbesondere in Verbindung mit den Figuren 3 und 12 zu entnehmen ist, können Stoßbereiche S, vorzugsweise stirnseitige Stoßbereiche S, benachbarter Tragprofilschienen 1 mit einem Tragschienendichtteil 7 nach außen abgedichtet werden. Dabei können die Tragschienendichtteile 7 bevorzugt eines der Dichtelemente 2 zur Abdichtung aufweisen; beispielsweise in Form der im Weiteren noch beschriebenen Dichtstege 71. Wie insbesondere der Fig. 3 zu entnehmen ist, kann das Tragschienendichtteil 7 eine den jeweiligen Stoßbereich S überspannende Dichtmanschette 70 sein. Diese Dichtmanschette 70 kann, wie beispielhaft gezeigt, mehrere in Richtung der Längserstreckung L versetzt zueinander angeordnete Reihen von Dichtstegen 71 - bspw. in Form von flexiblen Dichtlamellen (wie in Fig. 3 dargestellt) oder aus einem Dichtschaum(block) gebildet - aufweisen, welche eine sichere Abdichtung des jeweiligen Stoßbereichs S nach außen ermöglichen, wie beispielhaft den Fig. 1 und 12 zu entnehmen ist. Das Tragschienendichtteil 7 weist bevorzugt eine der Außenkontur der Tragprofilschiene 1 korrespondierende Kontur (hier also eine U-Form) auf, um eine möglichst sichere und umlaufend geschlossene Dichtwirkung zu erzielen. Die Dichtstege 71 sind bevorzugt auf einem Träger 72 vorgesehen und stehen von diesem zu dem Innenraum I bzw. den Tragprofilschienen 1 vor. Der Träger 72 dient dabei der sicheren Befestigung gegenüber den Tragprofilschienen 1 sowie der stabilen Lagerung und Abstützung der Dichtstege 71 insbesondere im montierten Zustand in Dichtanlage der Dichtstege 71 gegenüber den Tragprofilschienen 1. Träger 72 und Dichtstege 71 sind bevorzugt integral miteinander zur Bildung der Dichtmanschette 70 bereitgestellt.

Die Dichtelemente 2 dichten den Innenraum I wenigstens zur Öffnung 13 hin oder auch insgesamt gemäß einer definierten Schutzart geschlossen ab; dies vorzugsweise wenigstens gemäß IP64 oder IP67.

Folglich soll es ermöglicht werden, aus einem großen Repertoire an Komponenten in besonders flexibler und variabler Weise ein erfindungsgemäßes längliches Tragschienensystem 100 zusammenzubauen. Folglich ist die vorliegende Erfindung auch auf ein Kit zum Zusammenbau eines länglichen Leuchtentragschienensystems 100 gemäß der vorliegenden Erfindung gerichtet. Dieses Kit weist eine Vielzahl (also zwei oder mehr) von länglichen Tragprofilschienen 1 mit einer Längserstreckung L, in denen jeweils ein elektrisches Anschlusselement 3 vorgesehen sein kann und hier vorgesehen ist, auf. Das Kit weist des Weiteren eine Vielzahl (also zwei oder mehr) von Abdeckelementen 4 auf. Diese sind vorzugsweise aus der Gruppe von Abdeckelementen 4 aufweisend Abdeckungen, elektrische Bauteile und/oder elektronische Bauteile in beispielsweise der vorgenannten Art gewählt. Ebenso weist das Kit eine Vielzahl (also zwei oder mehr) von Dichtelementen 2 auf. Die Abdeckelemente 4 sind dabei lösbar mit den Tragprofilschienen 1 koppelbar, so dass mehrere der Abdeckelemente 4 die Öffnung 13 wenigstens teilweise und bevorzugt (im Wesentlichen) ganz abdecken. Die Dichtelemente 2 sind dabei derart zwischen den Abdeckelementen 4 und der jeweiligen Tragprofilschiene 1 sowie zwischen den benachbarten Abdeckelementen 4 anordenbar, so dass die Dichtelemente 2 den Innenraum I wenigstens zur Öffnung hin und bevorzugt insgesamt geschlossen abdichten.

Das Kit kann ferner eine Vielzahl (also zwei oder mehr) von Tragschienendichtteilen 7 aufweisen, wobei Stoßbereiche S benachbarter Tragprofilschienen 1 mit wenigstens einem der Tragschienendichtteile 7 nach außen abdichtbar sind.

Das Kit kann ferner eine Vielzahl (also zwei oder mehr) von Endkappen 6 aufweisen, wobei jeweils stirnseitig offene Enden 14 der Tragprofilschienen 1 bzw. des Innenraums I mit wenigstens einer der Endkappen 6 abdeckbar sind, und vorzugsweise der jeweilige Innenraum I mit der Endkappe 6 gegenüber der Tragprofilschiene 1 und/oder gegenüber dem angrenzenden Abdeckelement 4 nach außen hin geschlossen abdichtbar ist. Dies ist beispielsweise der Zusammenschau der Fig. 1, 2, 5, 6 und 14 zu entnehmen.

Das (vorzugsweise längliche) Abdeckelement 4 zur Längsabdeckung eines Teilabschnitts der länglichen Öffnung 13 der länglichen Tragprofilschiene 1 des Leuchtentragschienensystems 100 (vorzugsweise des erfindungsgemäßen Leuchtentragschienensystem 100) bildet einen eigenständigen Teil der vorliegenden Erfindung, wie im Weiteren beschrieben wird. So weist das Abdeckelement 4 an wenigstens einer seiner beiden gegenüberliegenden Stirnseiten 47 in Längsrichtung L4 gesehen ein und insbesondere das vorbeschriebene Stirndichtelement 23 auf. Das Stirndichtelement 23 weist einen bzw. den vorbeschriebenen Dichtlippenabschnitt 24 auf, welcher sich längs von dem Abdeckelement 4 weg erstreckt, um von dem Abdeckelement 4 längs vorzustehen.

Das Stirndichtelement 23 oder dessen Dichtlippenabschnitt 24 erstreckt sich bevorzugt quer (also beispielsweise schräg oder senkrecht) zur Längsrichtung L4 und bevorzugt (im Wesentlichen) über die gesamte Breite des Abdeckelements 4, wie dies beispielsweise in der Fig. 4 gezeigt ist.

Das Abdeckelement 4 kann wenigstens einen oder den Längsdichtabschnitt 20 aufweisen, welcher sich in Längsrichtung L4 und bevorzugt beidseits des Abdeckelements 4 erstreckt. Der Längsdichtabschnitt 20 ist vorzugsweise seitlich und/oder rückseitig exponiert bereitgestellt oder steht von dem Abdeckelement 4 entsprechend vor, wie dies beispielsweise der Fig. 4 oder auch der Fig. 11 zu entnehmen ist.

Das Abdeckelement 4 kann wenigstens ein oder das Zwischendichtelement 22 aufweisen, welches in Richtung quer zur Längsrichtung L4 sowie rückseitig und/oder vorderseitig vorsteht. Das Zwischendichtelement 22 ist besonders bevorzugt an wenigstens einem der beiden gegenüberliegenden Endabschnitte 46 oder Stirnseiten 47 des Abdeckelements 4 in Längsrichtung L4 vorgesehen. Dies kann insbesondere den Figuren 4, 6 und 8 entnommen werden.

Das Abdeckelement 4 kann, wie zuvor bereits beschrieben, jegliche Form von Abdeckelement darstellen, wie beispielsweise eine einfache Abdeckung wie eine Blende oder eine ästhetische Abdeckung oder eine optische Abdeckung oder eine funktionale Abdeckung, oder ein elektrisches oder elektronisches Bauteil, wie eine Leuchte (z.B. Lichtmodul, Lichtband, Spotleuchte, Notleuchte, Wegführungsleuchte, etc.) oder ein Lautsprecher oder ein Sensor oder ein Funkmodul und dergleichen mehr.

Wie insbesondere der Gesamtansicht der Fig. 1 aber auch den Detailansichten beispielsweise der Figuren 5, 7 und 9 zu entnehmen ist, kann das Abdeckelement 4 an seiner Vorderseite 48 einen Funktionsabschnitt aufweisen. Wie den Figuren 7 und 9 zu entnehmen ist, kann es sich bei dem Funktionsabschnitt 48 um eine hier lichtundurchlässige Blendenoberfläche handeln. Auch ist es denkbar, dass der Funktionsabschnitt 48, wie in Fig. 5 zu sehen ist, eine Lichtabgabefläche aufweist, um Licht von dem Abdeckelement 4 oder aus dem Innenraum I der Tragprofilschiene 1 nach außen abzugeben. Die Lichtabgabefläche ist dabei lichtdurchlässig und kann wahlweise lichtbeeinflussende Merkmale wie Linsen aufweisen. Auch kann die Lichtabgabefläche andere lichtbeeinflussende Eigenschaften aufweisen, wie beispielsweise Diffusoreigenschaften oder Lichtkonversionseigenschaften und dergleichen mehr.

Das Abdeckelement 4 kann an wenigstens einem seiner beiden gegenüberliegenden Stirnseiten 47 in Längsrichtung L4 gesehen eine Abdeckkappe 5 aufweisen. Die Abdeckkappe 5 kann dabei vorzugsweise das Stirndichtelement 23 und/oder das Zwischendichtelement 22 aufweisen oder bilden.

Das Stirndichtelement 23 oder, wenn die Abdeckkappe 5 das Stirndichtelement 23 aufweist bzw. bildet, die Abdeckkappe 5 können als Zweikomponenten-Spritzgussteil hergestellt sein. Der Dichtlippenabschnitt 24 kann dann bevorzugt aus einem weicheren Material hergestellt sein als der Rest des Stirndichtelements 23 bzw. der Abdeckkappe 5.

Das Stirndichtelement 23 einerseits sowie das Zwischendichtelement 23 und/oder das Längsdichtelement 20 andererseits sind bevorzugt wenigstens teilweise integral miteinander ausgebildet, wie dies beispielsweise der Fig. 4 zu entnehmen ist.

Das Abdeckelement 4 kann wenigstens einen oder den Querdichtabschnitt 21 aufweisen, welcher sich quer und bevorzugt senkrecht zur Längsrichtung L4 erstreckt. Vorzugsweise ist/sind das Zwischendichtelement 22 und/oder das Stirndichtelement 23 oder wenigstens dessen Dichtlippenabschnitt 24 als Querdichtabschnitt 21 ausgebildet.

Die Dichtelemente 2, also beispielsweise das Zwischendichtelement 22 und/oder das Stirndichtelement 23 oder wenigstens dessen Dichtlippenabschnitt 24 und/oder der Querdichtabschnitt 21 und/oder der Längsdichtabschnitt 20, können lösbar oder unlösbar vorgesehen sein. Ebenso können die Dichtelemente 2 als separate oder als integrale Elemente bereitgestellt sein.

Besonders bevorzugt ist das Abdeckelement 4 ein längliches Abdeckelement mit einer Längserstreckung L4.

Die Erfindung ist auf das vorbeschriebene Ausführungsbeispiel nicht beschränkt, sofern sie vom Gegenstand der folgenden Ansprüche umfasst ist.

## Patentansprüche

1. Längliches Leuchtentragschienensystem (100) aufweisend:
• eine längliche Tragprofilschiene (1) mit einer Längserstreckung (L),
• ein elektrisches Anschlusselement (3),
• eine Vielzahl von Abdeckelementen (4), und
• eine Vielzahl von Dichtelementen (2),
wobei die Tragprofilschiene (1) einen Innenraum (I) wenigstens teilweise begrenzt, wobei das elektrische Anschlusselement (3) in dem Innenraum (I) angeordnet ist, wobei die Tragprofilschiene (1) eine längliche Öffnung (13) aufweist, über die ein elektrisches oder elektronisches Bauteil (40) von außen mit dem elektrischen Anschlusselement (3) elektrisch koppelbar ist,
wobei die Abdeckelemente (4) lösbar mit der Tragprofilschiene (1) koppelbar sind, so dass sie die Öffnung (13) abdecken, und
wobei die Dichtelemente (2) derart zwischen den Abdeckelementen (4) und der Tragprofilschiene (1) sowie zwischen benachbarten Abdeckelementen (4) angeordnet sind, so dass die Dichtelemente (2) den Innenraum (I) wenigstens zur Öffnung (13) hin geschlossen abdichten.

2. Längliches Leuchtentragschienensystem (100) nach Anspruch 1,
wobei die Dichtelemente (2) Längsdichtabschnitte (20) aufweisen, welche sich in Längserstreckung (L) und bevorzugt beidseits der Öffnung (13) erstrecken, vorzugsweise zwischen der Tragprofilschiene (1) und dem jeweiligen Abdeckelement (4) und/oder zwischen zwei benachbarten Abdeckelementen (4), und/oder
wobei die Dichtelemente (2) Querdichtabschnitte (21) aufweisen, welche sich quer zur Längserstreckung (L) und bevorzugt die Öffnung (13) überspannend erstrecken, vorzugsweise zwischen zwei benachbarten Abdeckelementen (4) und/oder zwischen der Tragprofilschiene (1) und dem jeweiligen Abdeckelement (4), und/oder wobei die Dichtelemente (2) wenigstens teilweise integral miteinander ausgebildet sind, wobei vorzugsweise wenigstens eines der Querdichtelemente (21) mit wenigstens einem der Längsdichtelemente (20) ausgebildet ist, und/oder
wobei die Dichtelemente (2) den Innenraum (I) wenigstens zur Öffnung (13) hin gemäß einer definierten Schutzart, vorzugsweise wenigstens gemäß IP64 oder IP67, geschlossen abdichten.

3. Längliches Leuchtentragschienensystem (100) nach einem der vorhergehenden Ansprüche, wobei wenigstens eines der Abdeckelemente (4) wenigstens eines der Dichtelemente (2) als Zwischendichtelement (22) aufweist, welches in Richtung quer zur Längserstreckung (L) sowie rückseitig zum Innenraum (I) hin und/oder vorderseitig vom Innenraum (I) weg vorsteht, so dass es senkrecht bezüglich der Längserstreckung (L) auf die Öffnung (13) gesehen mit wenigstens einem Dichtabschnitt (45) der Tragprofilschiene (1) und/oder wenigstens eines benachbarten Abdeckelements (4) überlappt, um mit diesem in dichtender Anlage zu stehen,
wobei das Zwischendichtelement (22) bevorzugt als Querdichtabschnitt (21) ausgebildet ist, und/oder
wobei das Zwischendichtelement (22) bevorzugt an wenigstens einem der beiden gegenüberliegenden Endabschnitte (46) oder Stirnseiten (47) des Abdeckelements (4) in Richtung der Längserstreckung (L) gesehen vorgesehen ist.

4. Längliches Leuchtentragschienensystem (100) nach einem der vorhergehenden Ansprüche, wobei wenigstens eines der Abdeckelemente (4) an wenigstens einer seiner beiden gegenüberliegenden Stirnseiten (47) in Richtung der Längserstreckung (L) gesehen eines der Dichtelemente (2) als Stirndichtelement (23) aufweist, welches einen Dichtlippenabschnitt (24) aufweist, welcher sich längs von dem jeweiligen Abdeckelement (4) weg erstreckt, vorzugsweise zu einem benachbarten Abdeckelement (4) oder Tragprofilschienenabschnitt hin, wobei vorzugsweise der Dichtlippenabschnitt (24) in Längsrichtung von dem jeweiligen Abdeckelement (4) vorsteht,
wobei das Stirndichtelement (23) oder wenigstens dessen Dichtlippenabschnitt (24) bevorzugt als Querdichtabschnitt (21) ausgebildet ist, und/oder wobei die Stirndichtelemente (23), vorzugsweise deren Dichtlippenabschnitte (24), zweier stirnseitig benachbarter Abdeckelemente (4) längs in dichtender Anlage stehen, vorzugsweise derart, um die Öffnung (13) quer dichtend zu überspannen.

5. Längliches Leuchtentragschienensystem (100) nach einem der vorhergehenden Ansprüche, wobei die Abdeckelemente (4) an wenigstens einer ihrer beiden gegenüberliegenden Stirnseiten (47) in Richtung der Längserstreckung (L) gesehen eine Abdeckkappe (5) aufweisen,
wobei vorzugsweise die Abdeckkappe (5) wenigstens eines der Dichtelemente (2) aufweist oder bildet, ferner vorzugsweise wenigstens das Zwischendichtelement (22) und/oder das Stirndichtelement (23), besonders bevorzugt den Dichtlippenabschnitt (24).

6. Längliches Leuchtentragschienensystem (100) nach einem der vorhergehenden Ansprüche, wobei die Abdeckelemente (4) jeweils wenigstens einen Teil der Dichtelemente (2) aufweisen, und/oder wobei die Tragprofilschiene (1) wenigstens einen Teil der Dichtelemente (2) aufweist, und/oder
wobei die Dichtelemente (2) als separate Elemente oder als integrale Elemente der Tragprofilschiene (1) und/oder des jeweiligen Abdeckelements (4) bereitgestellt sind, und/oder
wobei die Dichtelemente (2) lösbar oder unlösbar mit der Tragprofilschiene (1) und/oder dem jeweiligen Abdeckelement (4) verbunden sind, und/oder wobei sich die längliche Öffnung (13) längs der Längserstreckung (L) der Tragprofilschiene (1) erstreckt.

7. Längliches Leuchtentragschienensystem (100) nach einem der vorhergehenden Ansprüche, wobei die Abdeckelemente (4) jeweils die Öffnung (13) quer zur Längserstreckung (L) überspannen, und/oder
wobei die Abdeckelemente (4) wenigstens teilweise längliche Abdeckelemente (4) aufweisen, welche sich längs der Längserstreckung (L) der Tragprofilschiene (1) und/oder längs der länglichen Öffnung (13) erstrecken, und/oder wobei die Abdeckelemente (4) wenigstens eine Art von Elementen aus der folgenden Gruppe von Abdeckelementen (4) aufweisen:
• Abdeckungen, wie Blenden (42); ästhetische (42) und/oder optische und/oder funktionale Abdeckungen (43), und/oder
• elektrische Bauteile und/oder elektronische Bauteile (40), wie Leuchten (41), z.B. Lichtmodule, Lichtbänder, Spotleuchten, Notleuchten, Wegführungsleuchten; Sensoren; Funkmodule; Lautsprecher, und/oder
wobei wenigstens eines der Abdeckelemente (4) mehrteilig ausgebildet ist, wobei zwischen den Teilen dieses Abdeckelements (4) vorzugsweise eine Bauteildichtung vorgesehen ist, wobei die Bauteildichtung vorzugsweise eines der Dichtelemente (2) aufweist oder ist, um besonders bevorzugt die Öffnung (13) im Bereich des Abdeckelements (4) nach außen abzudichten.

8. Längliches Leuchtentragschienensystem (100) nach einem der vorhergehenden Ansprüche, wobei die Tragprofilschiene (1) wenigstens eine Endkappe (6) aufweist, um den Innenraum (I) an wenigstens einem seiner beiden gegenüberliegenden Enden (14) in Richtung der Längserstreckung (L) gesehen abzudecken, wobei vorzugsweise die Endkappe (6) wenigstens eines der Dichtelemente (2) aufweist, um den Innenraum (I) gegenüber der Tragprofilschiene (1) und/oder gegenüber dem angrenzenden Abdeckelement (4) nach außen hin geschlossen abzudichten, und/oder wobei das elektrische Anschlusselement (3) wenigstens eine längliche Stromschiene (30) aufweist, welche sich bevorzugt längs in dem Innenraum (I) und weiter bevorzugt entlang einer länglichen Tragprofilwand (10, 11, 12) der Tragprofilschiene (1) erstreckt.

9. Längliches Leuchtentragschienensystem (100) nach einem der vorhergehenden Ansprüche und aufweisend mehrere längliche Tragprofilschienen (1), welche bevorzugt stirnseitig in Richtung der Längserstreckung (L) aneinandergereiht angeordnet sind, wobei vorzugsweise
• die Innenräume (I) benachbarter Tragprofilschienen (1) miteinander verbunden sind, und/oder
• die länglichen Öffnungen (13) benachbarter Tragprofilschienen (1) sich bevorzugt bündig ineinander erstrecken, und/oder
• die elektrischen Anschlusselemente (3), ferner vorzugsweise die länglichen Stromschienen (30), benachbarter Tragprofilschienen (1) elektrisch und bevorzugt ferner mechanisch miteinander verbunden sind und sich bevorzugt bündig zueinander erstrecken, und/oder
• Stoßbereiche (S), ferner vorzugsweise stirnseitige Stoßbereiche (S), benachbarter Tragprofilschienen (1) mit einem Tragschienendichtteil (7), vorzugsweise einer den jeweiligen Stoßbereich (S) überspannenden Dichtmanschette (70), nach außen abgedichtet ist, wobei die Tragschienendichtteile (7) bevorzugt eines der Dichtelemente (2) zur Abdichtung aufweisen.

10. Kit zum Zusammenbau eines länglichen Leuchtentragschienensystems (100) gemäß einem der vorhergehenden Ansprüche, aufweisend:
• eine Vielzahl von länglichen Tragprofilschienen (1) mit einer Längserstreckung (L), in denen jeweils ein elektrisches Anschlusselement (3) vorgesehen werden kann,
• eine Vielzahl von Abdeckelementen (4), vorzugsweise aus der Gruppe von Abdeckelementen (4) aufweisend:
• Abdeckungen, wie Blenden (42); ästhetische (42) und/oder optische und/oder funktionale (43) Abdeckungen, und/oder
• elektrische Bauteile und/oder elektronische Bauteile (40), wie Leuchten (41), Sensoren, Funkmodule, Lautsprecher, und
• eine Vielzahl von Dichtelementen (2),
wobei die Abdeckelemente (4) lösbar mit den Tragprofilschienen (1) koppelbar sind, so dass mehrere der Abdeckelemente (4) die Öffnung (13) abdecken, und
wobei die Dichtelemente (2) derart zwischen den Abdeckelementen (4) und der jeweiligen Tragprofilschienen (1) sowie zwischen den benachbarten Abdeckelementen (4) anordenbar sind, so dass die Dichtelemente (2) den Innenraum (I) wenigstens zur Öffnung (13) hin geschlossen abdichten.

11. Kit nach Anspruch 10, ferner aufweisend
• eine Vielzahl von Tragschienendichtteilen (7), wobei Stoßbereiche (S) benachbarter Tragprofilschienen (1) mit wenigstens einem der Tragschienendichtteile (7) nach außen abdichtbar sind, und/oder
• eine Vielzahl von Endkappen (6), wobei jeweils stirnseitig offene Enden der Tragprofilschienen (1) mit wenigstens einer der Endkappen (6) abdeckbar sind, und vorzugsweise der jeweilige Innenraum (I) mit der Endkappe (6) gegenüber der Tragprofilschiene (1) und/oder gegenüber dem angrenzenden Abdeckelement (4) nach außen hin geschlossen abdichtbar ist.

12. Längliches Abdeckelement (4) zur Längsabdeckung eines Teilabschnitts einer länglichen Öffnung (13) einer länglichen Tragprofilschiene (1) eines Leuchtentragschienensystems, vorzugsweise eines Leuchtentragschienensystems (100) gemäß einem der Ansprüche 1-9, wobei das Abdeckelement (4) an wenigstens einer seiner beiden gegenüberliegenden Stirnseiten in Längsrichtung (L4) gesehen ein Stirndichtelement (23) aufweist, welches einen Dichtlippenabschnitt (24) aufweist, welcher sich längs von dem Abdeckelement (4) weg erstreckt, um von dem Abdeckelement (4) längs vorzustehen.

13. Längliches Abdeckelement (4) nach Anspruch 12, wobei das Abdeckelement (4) wenigstens einen Längsdichtabschnitt (20) aufweist, welcher sich in Längsrichtung (L4) und bevorzugt beidseits des Abdeckelements (4) erstreckt, wobei der Längsdichtabschnitt (20) vorzugsweise seitlich und/oder rückseitig exponiert bereitgestellt ist oder von dem Abdeckelement (4) entsprechend vorsteht, und/oder wobei das Abdeckelement (4) wenigstens ein Zwischendichtelement (22) aufweist, welches in Richtung quer zur Längsrichtung (L4) sowie rückseitig und/oder vorderseitig vorsteht, wobei das Zwischendichtelement (22) vorzugsweise an wenigstens einem der beiden gegenüberliegenden Endabschnitte (46) oder Stirnseiten (47) des Abdeckelements (4) in Längsrichtung (L4) gesehen vorgesehen ist.

14. Längliches Abdeckelement (4) nach einem der Ansprüche 12 bis 13, wobei das Abdeckelement (4) eine Abdeckung, wie eine Blende (42) oder eine ästhetische (42) oder optische oder funktionale (43) Abdeckung, oder ein elektrisches oder elektronisches Bauteil (40), wie eine Leuchte (41) oder ein Sensor oder ein Funkmodul oder ein Lautsprecher, ist, und/oder
wobei das Abdeckelement (4) an seiner Vorderseite einen Funktionsabschnitt (48) aufweist, vorzugsweise eine Blendenoberfläche oder eine Lichtabgabefläche, und/oder wobei das Abdeckelement (4) an wenigstens einem seiner beiden gegenüberliegenden Stirnseiten (47) vorzugsweise in Längsrichtung (L4) gesehen eine Abdeckkappe (5) aufweist, wobei die Abdeckkappe (5) vorzugsweise das Stirndichtelement (23) und/oder das Zwischendichtelement (22) aufweist oder bildet, und/oder wobei sich das Stirndichtelement (23) oder dessen Dichtlippenabschnitt (24) quer zur Längsrichtung (L4) und bevorzugt über die gesamte Breite (B) des Abdeckelements (4) erstreckt, und/oder
wobei das Stirndichtelement (23) oder, wenn die Abdeckkappe (5) das Stirndichtelement (23) aufweist bzw. bildet, die Abdeckkappe (5) als Zweikomponenten-Spritzgussteil hergestellt ist, wobei der Dichtlippenabschnitt (24) aus einem weicheren Material hergestellt ist als der Rest des Stirndichtelements (23) bzw. der Abdeckkappe (5).

15. Längliches Abdeckelement (4) nach einem der Ansprüche 12 bis 14, wobei das Abdeckelement (4) wenigstens einen Querdichtabschnitt (21) aufweist, welcher sich quer und bevorzugt senkrecht zur Längsrichtung (L4) erstreckt, wobei vorzugsweise das Zwischendichtelement (22) und/oder das Stirndichtelement (23) oder wenigstens dessen Dichtlippenabschnitt (24) als Querdichtabschnitt (21) ausgebildet ist/sind, und/oder wobei mehrere der Dichtelemente (2), wie mehrere Stirndichtelemente (23) und/oder Zwischendichtelemente (22) und/oder Längsdichtabschnitte (20) und/oder Querdichtabschnitte (21), wenigstens teilweise integral miteinander ausgebildet sind, und/oder
wobei das Zwischendichtelement (22) und/oder das Stirndichtelement (23) oder wenigstens dessen Dichtlippenabschnitt (24) und/oder der Querdichtabschnitt (21) und/oder der Längsdichtabschnitt (20) lösbar oder unlösbar vorgesehen ist/sind.
